**Europäisches Patentamt**

**European Patent Office**

**Office européen des brevets**

(11) Publication number: **0 082 033**
**B1**

# EUROPEAN PATENT SPECIFICATION

(45) Date of publication of patent specification: **17.02.88**

(51) Int. Cl.⁴: **H 02 K 41/00, F 16 F 6/00**

(21) Application number: **82402077.0**

(22) Date of filing: **12.11.82**

(54) **Controlled electric drive (CED) device.**

(30) Priority: **12.11.81 US 320808**

(43) Date of publication of application:
**22.06.83 Bulletin 83/25**

(45) Publication of the grant of the patent:
**17.02.88 Bulletin 88/07**

(84) Designated Contracting States:
**AT BE CH DE FR GB IT LI NL SE**

(56) References cited:
**DE-A-2 455 355**
**DE-A-2 521 175**
**US-A-3 136 934**
**US-A-3 619 673**
**US-A-3 656 014**

(73) Proprietor: **Resnicow, Herbert**
**107 Weeks Road East Willston**
**Long Island New York 11596 (US)**

(72) Inventor: **Resnicow, Herbert**
**107 Weeks Road East Willston**
**Long Island New York 11596 (US)**

(74) Representative: **Polus, Camille et al**
**c/o Cabinet Lavoix 2, Place d'Estienne d'Orves**
**F-75441 Paris Cedex 09 (FR)**

Courier Press, Leamington Spa, England.

## Description

### Technical Field

The present invention relates to a controlled electric drive (CED) device, and more particularly to a device comprising a true electric spring for producing controlled direct translatory linear, planar or three-dimensional motion from an electric current without use of a conventional rotary motor or a mechanical device to transfer rotary motion into translatory motion. Thus, in the CED device of the present invention, spring motion depends on electrical characteristics, rather than on elastic property of spring material.

### Background Art

Prior to the development of the CED device, prior art practitioners employed mechanical devices which were powered by conventional rotary electric motors. Such devices were typically inflexible, mechanically complex, bulky, heavy, noisy, costly, energy-inefficient, subject to wear, and incapable of producing precisely controlled, very rapid movement. Furthermore, attempts to overcome the disadvantages of such mechanical devices by development of electric devices resulted in inefficiency of operation, as well as in undesirable size and cost of the device. In addition, the various disadvantages pointed out above were not satisfactorily eliminated.

Electrical translatory devices, such as solenoids and reed relays, proved inflexible in that they were unable to control their movements, other than by mechanical springs or stops. Such inflexibility of the prior art devices also manifested itself in the form of an inability to accomplish sophisticated movements, such as complex planar or three-dimensional curves. Finally, the prior art devices were hampered by operational disadvantages, including overshoot, hunting and ringing. Such devices were generally used in an on-off mode.

Arrangements of the prior art have included a mechanical spring. However, the mechanical spring is burdened with the following drawbacks: the spring constant is not constant over the full range of possible tension or compression of the spring; the spring constant is not the same in tension as it is in compression; the spring constant changes with age and mechanical fatigue; the spring constant cannot be varied at will; and the spring resistance cannot be completely eliminated, making it necessary either to apply force continuously or to use a locking mechanism to maintain a desired displacement position.

### Disclosure of the Invention

It is the primary object of the present invention to provide a controlled electric drive (CED) device, and more particularly to provide a device comprising a true electric spring for accurately controlling the motion of an electrically driven device or other moving device, so as to provide complex, rapid and direct translatory motion in response to the application of an electric current such motion being achieved directly, without the use of a conventional rotary motor or mechanical device to transform rotary motion into translatory motion, or other complex motions.

It is an additional object of the present invention to provide a device with increased flexibility of operation, that is, a device which is capable of producing complex translatory, rotary, planar and three-dimensional motion, executed in a precise, rapid and efficient manner.

It is an additional object of the present invention to provide a device which is relatively light and compact, which is easy and economical to manufacture, using relatively little material and being made by standard manufacturing processes, and which is energy efficient, using less energy than prior art devices used to accomplish a particular motion, using almost no energy when not in actual motion, and using no energy to hold position in a non-equilibrium location.

It is an additional object of the present invention to provide a device which is capable of following a complex, rapidly changing electrical input having a wide range of amplitudes and directions of current flow, so as to provide accurately controlled and complex motion, not within the capability of prior art devices, without being burdened by hunting, overshoot or ringing.

It is an additional object of the present invention to provide a device which, when equipped with a cutting edge, needle, marker or other tool or instrument, is able to cut, penetrate, punch or mark, or otherwise perform useful functions, in accordance with any desired size, shape, pattern or depth, at a desired speed, and with desired accuracy.

According to the present invention there is provided a controlled electric device including a pair of magnetic poles of different polarity arranged adjacent to each other so as to have a relatively narrow gap therebetween and a controller conductor means for receiving a control current, said device characterized in that said magnetic poles provide an essentially uniform magnetic field defined by magnetic lines of force having a first direction and in that there is included a driver conductor means disposed in said gap and having a long axis in a second direction perpendicular to said first direction for receiving a driver current, said driver conductor means being responsive to said driver current and to said magnetic lines of force so as to be moved from an original position in a third direction at a right angle to said first and second directions, and in that said controller conductor means is fixed to said driver conductor means and is insulated from it, said controller conductor means having first and second portions disposed on either side, in a direction parallel to said second direction, of said driver conductor means, and so arranged that current folowing in said first portion follows in a direction opposite to current flowing in said second portion, said controller conductor means being connected to said drive conductor means so that, when said driver conductor means is moved, said controller means is operative to effect controlled changes in linear motion of said conductor means along said third direction.

The inventive CED device converts electric current into accurately controlled, translatory motion, which may be linear, planar or rotary, without the use of a conventional rotary motor or a mechanical device to transform rotary motion into translatory motion, and without the use of mechanical stops, springs, or brakes. In such a device, spring action is a function of a repeatable, controllable and infinitely variable electrical input, and of electrical characteristics, rather than of elastic properties of spring material.

In addition, the device of the present invention is able, when employed with a cutting edge, needle or marker, etc., to perform cutting, piercing, making or similar operations in accordance with a desired shape, size and/or depth, at a desired speed of movement, and with a very high degree of accuracy.

In contrast to the mechanical spring described above, the device of the present invention comprises an electrical spring used to control motion of an armature, and has the following inherent advantages: it has a spring constant which is uniform over the whole range of motion of the armature; it is the same in both "tension" and "compression" (movement in one direction or in the opposite direction); the spring constant does not change due to age or fatigue of materials; the spring constant can easily be infinitely varied, by usual and well-known means, from zero (complete absence of resisting force, accomplished by turning off the current) to the maximum steady-state resistance (based on the maximum spring constant for a particular device), variation of the spring constant being accomplished by increasing the current to the maximum amperage permitted by the constant use, or the intermittent use (as the case may be), heat dissipating ability of the assembly.

Furthermore, in the device of the present invention, a specific spring constant can be reinstated at will, after change or shut-off, by providing to the device an amperage of current identical to that dictated by previous calibration of the device. In addition, the spring constant can be (automatically) made very great for short periods of time in order to accommodate sudden great overloads of applied force, such being accomplished without harm, provided that the current and/or duration of current flow are kept below destructive limits.

A preferred embodiment of the CED device of the present invention comprises a pair of congruent, planar, rectangular magnetic pole faces of different polarities, arranged adjacent and parallel to each other so as to have a relatively narow gap therebetween, in which there is disposed an essentially uniform magnetic field having relatively small and equal spillage of magnetic force lines at the edges of the pole faces. The device of the present invention further includes a straight driver conductor centered in the gap between the magnetic pole faces and parallel to one pair of pole face edges, and arranged to move freely in a direction perpendicular to itself so that a direct electric current energizing the driver conductor tends to move the driver conductor out of the magnetic field at right angles to the driver conductor and to the magnetic lines of force. The direction of said motion, towards one or other of the pair of magnetic pole face edges (which are parallel to the driver conductor), depends on the direction of current flow in the driver conductor. The electrical leads connected to the driver conductor are also connected to a source of direct current which may be reversed so as to the direction of its current flow, and which may be varied in voltage and amperage. Finally, the device of the present invention includes a controller conductor, which is fixed adjacent to the driver conductor, and which is in the form of a flat, planar, generally rectangular, continuous spiral centered on the driver conductor as a former, with a multiplicity of turns insulated from the driver conductor and from each other, the longitudinal turns on either side of the driver conductor being parallel to the driver conductor. There are sufficient turns so that a portion of the longitudinal turns, on either side of the driver conductor, extends outside the magnetic field between the magnetic pole faces. The electrical leads of the controller conductor are connected to a source of direct current which is separate and distinct from that of the driver conductor. The controller current source may be varied in voltage and amperage, and the direction of current flow is such that each of the parallel portions of the controller conductor, on either side of the driver conductor, tends to move out of the magnetic field in a direction away from the other portion, and away from the driver conductor. The driver conductor and the parallel longitudinal portions of the controller conductor flanking the driver conductor are sufficiently longer than the width of the rectangular magnetic pole faces, all measured in a direction parallel to the driver conductor, so that the straight portions of the controller conductor and of the driver conductor will be within the magnetic field throughout the entire range of movement of the armature. The armature comprises the driver conductor and the controller conductor, and a drive bar may be fixed to the armature to transmit motion to an operating element.

Whereas the above describes the basic linear CED device of the present invention, various embodiments are disclosed below. For example, in one embodiment, the drive and the controller are separated from each other, and are connected by a drive bar, the driver and controller each having its own magnet pair. In accordance with a further feature of the invention, pairs of controllers are fixed to each other, with an intervening drive bar fixed to a driver being provided.

CED devices may be, in accordance with a further embodiment of the invention, stacked or arrayed in tandem to provide greater force. CED devices may also be arranged in pairs, at right angles to each other, to provide complex planar motion. A CED device also may be fixed to a planar array to provide three-dimensional motion. CED devices additionally may be arranged in complex geometric arrays.

The magnets of CED devices of the present invention may be of a shape other than rectangular shape, such as disc or annular ring shape, to provide varied desired motions. CED devices may be simply curved into the shape of cylinders, or doubly curved to provide spherical motion. Controllers of devices of the invention may be single wires, spirals, rectangular magnets or other shaped magnets. Stator magnets may be rectangular, triangular, or otherwise shaped, or may be formed in a combination of shapes. Magnetic gaps may be rectangular, or of other shape, in cross-section.

Another aspect of the invention is disclosed by claim 23. According to this aspect the controller means comprises instead of conductors a pair of magnets.

Brief Description of Drawings

Figure 1 is a top view of the basic linear CED device of the present invention.

Figure 2 is a sectional view of the basic linear CED device of the present invention, said sectional view being taken along section A—A of Figure 1.

Figure 3 is a sectional view of a stacked array of CED devices.

Figure 4 illustrates a tandem array of basic linear CED devices.

Figure 5 is a schematic plan view of an elongated basic CED, with the driver and controller being lengthened with respect to the magnet pair.

Figure 6 is a schematic plan view of four elongated CED devices, with the armatures being fixed together in the form of a cross so as to provide planar motion.

Figure 7 is a schematic plan view of a planar CED with a single controller.

Figure 8 is a schematic plan view of the direction of the winding of the controller conductor of the planar CED shown in Figure 7.

Figure 9A is a schematic plan view of a three-dimensional CED with a single controller, depicting a basic linear CED fixed at right angles to the plane of motion so as to provide three-dimensional motion.

Figure 9B is a cross-sectional view of the three-dimensional CED illustrated in Figure 9A, the cross sectional view being taken along Section B—B of Figure 9A.

Figure 10A is a schematic plan view of a continuous-motion CED.

Figure 10B is a schematic plan view of a continuous-motion CED with a single pair of stator magnets.

Figure 11 is a plan view of a rotary CED.

Figure 12 is a sectional view of a cylindrical or spherical CED.

Figure 13A is a plan view of a shaped-stator-magnet CED.

Figure 13B is a plan view of an asymmetrical shaped-stator-magnet CED.

Figure 14 is a plan view of a shaped-stator-magnet CED with the controllers in reverse mode.

Figure 15 is a plan view of a continuous shaped-stator-magnet CED.

Figure 16 is a plan view of a compact shaped-stator-magnet CED.

Figure 17 is a right-hand view of the compact shaped-stator-magnet CED of Figure 16.

Figure 18 is a plan view of an ultra-compact shaped-stator-magnet CED.

Figure 19 is a right-hand view of the ultra-compact CED shown in Figure 18.

Figure 20 is a plan view of a linear CED with a one-sided controller.

Figure 21 is a right-hand view of the CED of Figure 20.

Figure 22 is a front view of the CED of Figure 20.

Figure 23 is a left-hand view of the CED of Figure 20.

Figure 24 is a plan view of a magnet-controller CED.

Figure 25 is a sectional view of the CED of Figure 24, the sectional view being taken along section D—D.

Figure 26 is a plan view of a shaped-magnet-controller CED.

Figure 27 is a section view of the shaped-magnet-controller CED of Figure 26, the sectional view being taken along section E—E.

Figure 28 is a sectional view of a shaped-cross-section magnet-controller CED.

Figure 29 is a sectional view of a shaped-magnetic-gap controller-magnet CED.

Best Mode for Carrying Out the Invention

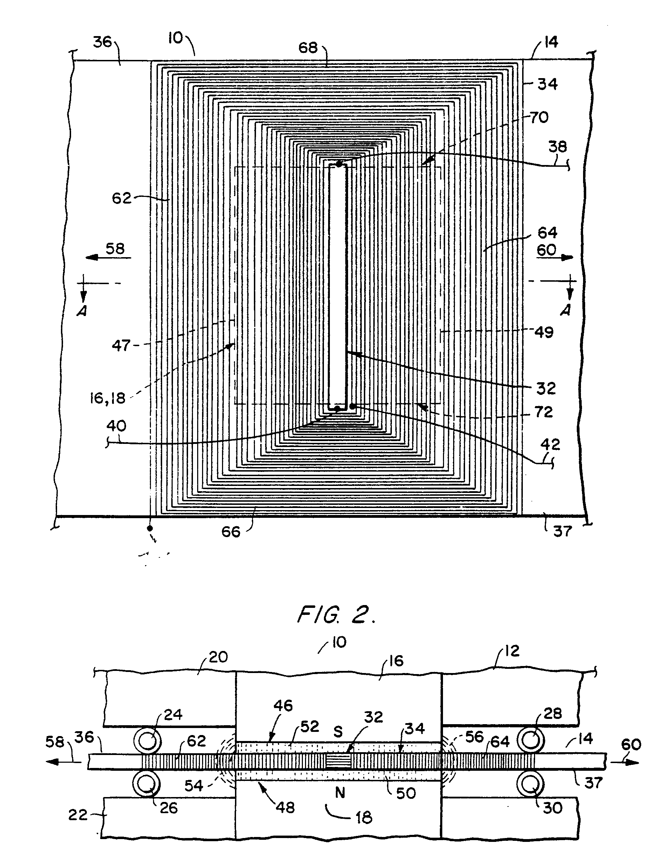

The invention of the applicatioon will now be more fully described with reference to Figures 1 and 2, which are a top plan view and a sectional view, respectively, of the CED device of the present invention.

As seen in Figures 1 and 2, the basic linear controlled electric drive (CED) device 10 comprises a stator 12 and an armature 14. The stator 12 comprises a pair of magnetic poles 16 and 18 (shown dotted in Figure 1, for clarity), support framework 20 and 22, and roller guides 24, 26, 28 and 30. The armature 14 comprises a driver 32, a controller 34, drive bars 36 and 37, driver leads 38 and 40, and controller leads 42 and 44.

More specifically, a pair of magnetic poles 16 and 18, with planar, rectangular pole faces 46 and 48, is arranged so that the individual poles 16 and 18 thereof are adjacent to each other in attractive relationship. The pole faces 46 and 48 are parallel and congruent with respect to each other, so as to have a relatively narrow magnetic gap 50 formed therebetween, with an essentially uniform magnetic field 52 being provided in the gap 50, and with relatively small and equal spillages 54 and 56 of magnetic lines of force occurring at the ends of the gap 50. The poles 16 and .18 may, in accordance with the subject invention, be permanent magnets, electromagnets, pole pieces, or the like.

The driver 32 is an electrical conductor, which is, preferably, of rectangular cross-section and of laminated construction, and which is arranged between, and preferably equidistant from, the pole faces 46 and 48. The long axis of the driver 32 is parallel to the respective edges 47 and 49 of the pole faces 46 and 48, so that the driver 32 may move freely along the directions indicated by arrows 58 and 60. The driver 32 is energized by means of the pair of electrical leads 38 and 40 connected thereto, the leads 38 and 40 being also connected to a source of direct current which is adjustable as to its intensity and/or polarity by usual and well-known means.

An electrical current passing through driver 32 tends to move driver 32 out of the magnetic field 52, in a direction perpendicular to the long axis of driver 32, and also in a direction perpendicular to the direction of the magnetic lines of force of the magnetic field 52. The direction of movement of driver 32 is indicated by either arrow 58 or arrow 60 (in Figure 2), depending on the direction of current flowing through driver 32. Presuming a constant strength of magnetic field 52, and a constant fixed length of the conductor of driver 32 within the magnetic field 52, the force exerted on the driver 32 (which results from the interaction of the magnetic field 52 with the current flowing in the driver 32) is directly proportional to the amperage of current following through driver 32.

A controller 34 is fixed adjacent to the driver 32, the controller 34 being an electrical conductor, preferably of flat wire or foil, arranged in the form of a planar, generally rectangular spiral centered on the driver 32, as a former, with a multiplicity of turns electrically insulated from each other and from the driver 32. The conductor turns of the portions 62 and 64 of the controller 34 either are within the magnetic influence of the magnetic field 52 and the spillages 54 and 56, or can move into these areas in the normal operation of this preferred embodiment of the invention. Moreover, the conductor turns are spaced uniformly apart, preferably in direct contact with each other, with the first inner turn being in direct contact with the driver 32. More specifically, the turns are disposed on either side of, and parallel to, the driver 32, and are additionally parallel to the edges 47 and 49 of pole faces 46 and 48, respectively. Preferably, the same number of conductor turns are present in each portion 62 and 64, so that the mass of controller 34 is equally distributed on either side of the driver 32, and the restoring spring forces derived from the conductor turns of the controller 34 are equally distributed on either side of the driver 32.

The controller 34 may be energized by a pair of electrical leads 42 and 44 connected thereto, and also connected to a direct current source of fixed polarity, which source may be varied as to its voltage and amperage by usual and well-known means. The direction of current flow in the controller 34, with respect to the polarity of the magnetic field 52, is such that the interaction of the current flowing in the conductor turns of portion 62 with the magnetic field 52 tends to move portion 62 out of magnetic field 52 in the direction shown by arrow 58, that is, away from the driver 32 and portion 64. Since the controller 34 is a spiral formed of a single continuous conductor, the direction of current flow in the conductor turns of portion 64 is, with respect to magnetic field 52, opposite to the direction of current flow in the conductor turns of portion 62, so that the interaction of the current flowing in the conductor turns of portion 64 with the magnetic field 52 will tend to move portion 64 out of magnetic field 52 in the direction shown by arrow 60, and away from the driver 32 and the portion 62. When the driver 32 is centered at the middle axis of the magnetic poles 16 and 18, as shown, there are an equal number of conductor turns of portion 62 and of portion 64 in the magnetic field 52, and, since the magnetic poles 16 and 18 are rectangular, there are equal lengths of conductor turns of portions 62 and 64 in the magnetic field 52. Since the controller 34 is a single continuous conductor, the same current flows in each conductor turn of portions 62 and 64, and the force which tends to move portion 62 in the direction indicated by arrow 58 is equal and opposite to the force which tends to move portion 64 in the direction indicated by arrow 60. These forces are then in equilibrium, and, since the controller 34 and the driver 32 are fixed to each other, and to drive bars 36 and 37, the armature 14 is in equilibrium. Moreover, the armature 14 is constrained by roller guides 24, 26, 28 and 30, or by other usual and well-known means, to move only in the directions shown by arrows 58 and 60.

Should the armature 14 be displaced by an outside force in the direction shown by arrow 58, the number of conductor turns of portion 62 within, and interacting with, the magnetic field 52 and spillage 54 will be fewer than in the equilibrium position, in direct proportion to the amount of the displacement of armature 14. In a similar manner, the number of conductor turns of portion 64, within, and interacting with magnetic field 52 and spillage 56, will be greater than in the equilibrium position, and will be in direct proportion to the amount of displacement of armature 14. By symmetry, the increase in the number of effective conductor turns (those within the influence of magnetic lines of force) of portion 64 will be exactly the same as the decrease in the number of effective conductor turns of portion 62, so that the force due to the current in controller 34, which tends to move the armature 14 in the direction of arrow 58, will be decreased in proportion to the displacement of armature 14. Moreover, the force tending to move armature 14 in the direction of arrow 60 will be increased in proportion to the displacement of armature 14 from the equilibrium position. The restoring force, corresponding to the resultant of the forces acting on the armature 14, will tend to move the armature 14 back to the central equilibrium position, and this restoring force will be directly proportional to the displacement of the armature 14. It is clear that a force applied to the armature 14, in the direction of arrow 58, will displace the armature 14 in the direction shown by arrow 58 until the restoring force (resulting from the imbalance of the forces acting on the armature 14, due to the increase and decrease, respectively, of the number of conductor turns of portions 64 and 62 interacting with the magnetic lines of force) exactly balances the displacing force.

In other words, the displacement of armature 14 is directly proportional to the displacing force applied to armature 14. For specific physical dimensions of magnetic pole faces 46 and 48, magnetic gap 50 and controller 34, and for fixed magnetic strength of magnetic poles 16 and 18, the restoring force exerted by the controller 34, in resisting the displacement of the armature 14, is directly proportional to the amperage of the current flowing in the conductor of the controller 34. For a specific amperage of current flowing in the controller 34, a specific applied displacing force will produce a proportional specific displacement within the full range of amplitude of motion of the armature 14, and a specific incremental increase or decrease of applied displacing force will produce a directly proportional incremental increase or decrease of displacement. For a specific set of physical characteristics and a specific amperage of current in the controller 34, the applied displacing force required to move the armature 14 a unit of distance may be considered a measure of the "spring constant" of the device in a manner analogous to the determination of the spring constant of a mechanical spring, such as a coiled wire spring.

For some applications of this embodiment of the CED device of the present invention, wherein external forces are applied, the driver 32 need not be used, or the driver 32 may be used only to resist or balance out all, or a portion, of an external applied force. In the preferred embodiment, the displacing force applied to the armature 14 is supplied by energizing the driver 32 by application of an electrical current to the leads 38 and 40. For a fixed set of physical and magnetic characteristics of a particular CED device 10, the force exerted by driver 32 on the armature 14 is directly proportional to the amperage of the current in driver 32, and the direction of the force applied to armature 14 by driver 32, in the direction shown either by arrow 58 or by arrow 60, is a function of the direction of current flow in driver 32. It is clear that, for a specific current flow in controller 34 (that is, a specific "spring constant"), the armature 14 can be moved accurately and rapidly to any desired position within the full range of movement allowed by the device, with an infinite number of possible positions, and with full repeatability of position, by controlling the direction and intensity of the current flow in driver 32. It is also clear that, once a desired position has been achieved, if both currents (those in the controller 34 and in the driver 32) are shut off simultaneously (making due provision for back EMF due to collapsing magnetic fields in the conductors), the armature 14 will remain in the desired position for an unlimited time without further expenditure of energy. In addition, the device may be quickly reactivated for movement to a new position and activated, again and again, or may be returned to the equilibrium position quickly and accurately by switching off the current of the driver 32, but not the current to the controller 34.

Furthermore, complex motions and reciprocating mnotions are easily and accurately produced in accordance with the invention. The current in the driver 32 may be applied slowly, rapidly, or in a varying pattern and/or direction, to achieve any desired pattern of motion. The magnitude of the force transmitted to a tool fixed to the drive bar 36 and 37, and the speed of application of this force, as well as the amplitude of the motion and the pattern of motion can be controlled by selecting the appropriate amperage for the current in the controller 34 and the driver 32, and the rise time and pattern of the application of these currents.

In normal use, the movement of the armature 14 is quite fast, being a function of the currents and masses involved. Since the device is relatively light, compared to the forces resulting from the currents which may be carried, and since there are no mechanical devices in the chain of movement to slow down the movement by friction or unnecessary mass, the movements achieved in the inventive CED device will be faster than in comparable mechanical devices. If greater than normal speed is required, the current in the controller 34 may be switched off until the armature 14 is almost in the desired position, whereupon it may be switched on again. Further, the current to the driver 32 may be initially rapidly increased far beyond that needed to achieve the desired displacement, and then rapidly reduced, or even momentarily reversed (to give a braking effect), just before the desired position is achieved, whereupon the appropriate current may then be applied to the driver 32.

Finally, when even more rapid response is required, the current in the controller 34 may be momentarily reversed in direction immediately after the start of motion of the armature 14, so that the imbalance of forces in the portions 62 and 64 of the controller 34 tend to apply force in the same direction as the current in the driver 32, rather than oppose its movement. Then, when the desired displacement is almost reached, the direction of the current flow in the controller 34 is suddenly reversed as to its normal direction of flow, and may even be momentarily increased, to give a stronger braking effect, and to reduce potential overshoot of position. Thus, it is clear that a great many types and velocities of motion may be achieved by controlling and varying the amplitude, direction, speed of application, and pattern of application of the electric current to the driver 32 and to the controller 34, such being accomplished by usual and well-known current application means.

Figure 1 illustrates the controller 32 with an essentially rectangular shape. In this embodiment, the portions of the controller 34, which are not in, or cannot move into, the magnetic field 52 or the spillages 54 and 56, have no function other than to complete the electric circuit of the controller 34. Accordingly, these end portions of the controller 34 may be curved or semi-circular to reduce mass and electrical resistance.

If the device of the present invention is used horizontally, as shown in Fig. 2, the effect of gravity on the armature 14 will only increase the load on the lower roller guides 26 and 30, and will have no significant effect on the motion of the armature 14. If the CED device 10 is used at an angle to the horizontal, resulting from rotation of the device 10 about an axis perpendicular to the longitudinal axis of the driver 32, there will be a slight increase in longitudinal stress in the roller guides 24, 26, 28 nd 30, but this stress increase will have no significant effect on the motion of the armature 14. Should the CED device 10 be used at an angle to the horizontal, resulting from rotation of the device 10 about an axis parallel to the longitudinal axis of the driver 32, the vertical component of the weight of the armature 14 and drive bar assembly 36 and 37, plus the weight of such tools or instruments which may be fixed to the drive bar 36 and 37, plus that part of the driver leads 38 and 40 and the controller leads 42 and 44 (which part is supported by the armature 14), will act in combination as an external force applied to the armature 14. In the CED device 10 of the present invention, compensation for the latter phenomenon is automatically provided, since the armature 14 moves downward until a new equilibrium position is reached, which equilibrium position is not at the geometric center of the pole faces 46 and 48. In such case, the current applied to the driver 32, to move the armature 14 against gravity, will necessarily be different from the current required to move the armature 14 with gravity, and compensation may be achieved automatically, as a function of the angle of rotation, by usual and well-known means.

If the CED device 10 is used in a manner which involves a varying effect of gravity on the armature 14, compensatory electronic control, by usual and well-known means, may be employed to vary the current in the driver 32, so as to achieve the desired equilibrium position and speed and amplitude of movement. This is unlike mechanical devices, wherein accurate compensation for varying components of gravitational forces is difficult to achieve. If desired, a biasing current may be employed to bias the driver 32 so as to keep the armature 14 in a geometrically centered position, and to compensate for fixed or varying components of the gravitational force. Such force is monitored, if desired, by measuring the electric currents induced in the driver 32 by the motion of the armature 14, driver 32 being used as a generator, and only the controller 34 being energized.

The magnetic gap 50 is preferably small so as to increase the strength of the magnetic field 52, and to keep the size of the field spillage 54 and 56 very small. If there were no spillage 54 and 56, the controller 34 could function as a theoretically perfect spring, with the displacement being exactly proportional to the applied force, instead of functioning as an essentially perfect spring. On the other hand, if the magnetic field 52 were perfectly sharp-edged, without spillages 54 and 56, the displacement of the armature 14 would be in increments equal to the thickness (in the direction of motion) of the preferably rectangular wires or metal foil which comprise the conductor of the controller 34. That is, a single turn of the conductor, no matter how thin, would be either in or out of the magnetic field 52. Since the field spillages 54 and 56 vary from full magnetic strength to essentially zero magnetic strength in a relatively short distance, this allows several of the thin foils to be in a magnetic field with a gradient which falls off sharply. This, coupled with the ease of producing very small changes in the currents in the driver 32 and the controller 34, allows an infinite choice of displacements of the armature 14 within the operating range of a specific CED device.

It is clear that a CED device may be embodied in various shapes, sizes, and configurations of the basic elements noted above. However, in such cases, the relationship between driver current and armature displacement may not always be linear. When non-linear current/displacement relationships are required, maximum flexibility may be achieved by electronically varying the driver and/ or controller currents, rather than by using specifically shaped CED devices, although such designs are not ruled out.

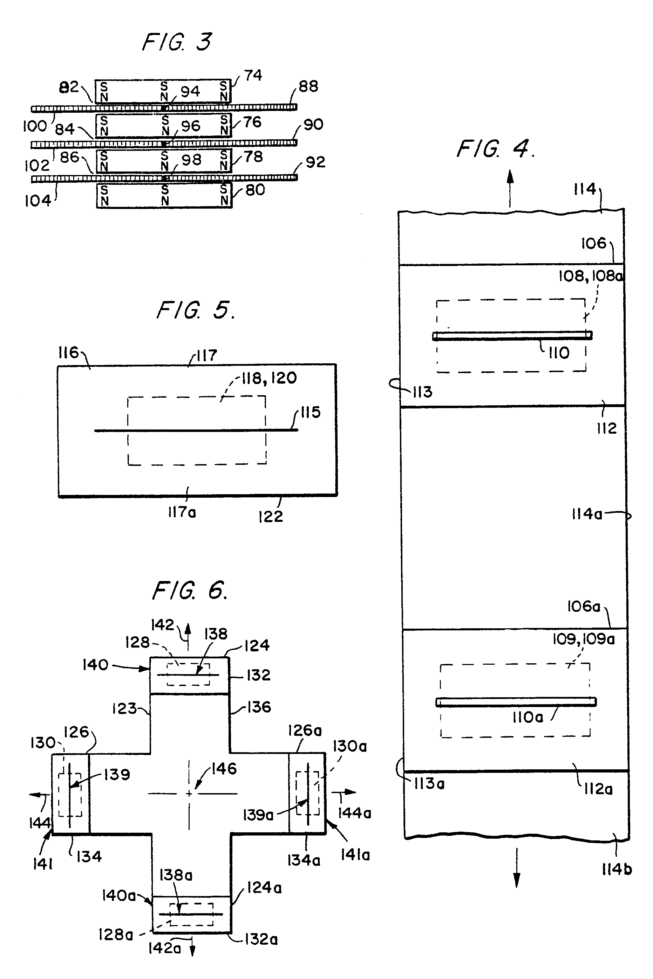

Should it be required to produce a greater force than is available from a particular single CED device, a stacked array of CED devices may be used, as shown in Figure 3. Although, as previously noted, the magnetic poles of a CED device may be permanent magnets, electromagnets, pole pieces, etc., for simplicity, the following descriptions and accompanying diagrams will describe permanent magnets, unless otherwise indicated. In Figure 3, a multiplicity of rectangular planar magnets 74, 76, 78 and 80 are fixed in a stack, parallel and congruent to each other, in serial attraction in a manner similar to that illustrated in Figures 1 and 2. Armatures 88, 90 and 92 are provided in the magnetic gaps 82, 84 and 86, between magnets 74, 76, 78 and 80, the armatures 88, 90 and 92 comprising drivers 94, 96 and 98, and controllers 100, 102 and 104. The armatures 88, 90 and 92 are fixed together to a drive bar, which is not shown for clarity, so as to act as a unit. The drivers 94, 96 and 98 are connected electrically, preferably in series, with all currents flowing in the same direction. The number of CED devices arrayed in a stack will be a function of the desired force and the physical characteristics of the three basic elements (magnets, driver and controller) of each CED device. It is clear that the electrical connections to the stack may be made so as to utilize, if desired, fewer than the entire number of units in the stack. It is also clear that a small range of sizes of the basic CED elements (magnets and armatures) may be stocked, and may be easily arranged in stacks so as to provide a wide range of forces and amplitudes of motion, and further that, after use, three elements may be easily disassembled into the basic components for reuse without loss, since the only significant wear will be that of the guides.

Where space considerations require, CED devices may be arranged in tandem, as illustrated in Figure 4. A multiplicity of CED devices 106, 106a, etc., comprising magnet pairs 108 and 108a, 109 and 109a, etc. (shown in dotted outline), drivers 110, 110a, etc., and controllers, 112, 112a, etc., are arranged in tandem, the magnet pairs 108 and 108a, and 109 and 109a, etc., being fixed to a framework (not shown), and the armatures 112, 112a, etc. being connected together by a drive bar 114, 114a, etc., so as to function as a unit. As with the CED devices shown in Figure 3, the tandem CED devices 106, 106a, etc., may be arranged in such lengths as are desired, and a multiplicity of tandem units may be stocked for use and reuse, as required, especially if standard modular sizes of CED devices are used. It is clear that the driver(s) need not be within the same magnetic field as the controller(s) to which it (they) is (are) fixed, but may have its (their) own magnet pair, and may be fixed to the controller(s), at a distance, by a drive bar.

For simplicity, in all further drawings, a CED device in plan will be indicated symbolically by drawing the outline of the controller, showing the driver as a line, using a dotted outline to indicate the magnet pair, and a rectangle to indicate the controller.

Two or more CED devices may be arranged to act in two non-parallel directions so as to produce planar motion. It is necessary, however, that the basic CED device 10 (see Fig. 1) be modified to permit motion in a direction parallel to the driver 32, as well as motion perpendicular to driver 32. In Figure 1, driver 32 is slightly longer than the length of magnet pair 16 and 18, as measured in a direction parallel to driver 32. This permits the entire driver 32 to be within the magnetic field 52 and within the field spillages at edges 70 and 72 of magnet pair 16 and 18, and permits connection of the leads 38 and 40 to driver 32 at a point outside the influence of the magnetic lines of force.

Figure 5 illustrates a basic CED device wherein the driver 115 and the controller 116 are both sufficiently longer than the magnet pair 118 and 120, measured in a direction parallel to the driver 115, so that the operating portions 117 and 117a of the controller 116 will always be within, or be able to move within, the influence of the magnetic field, even when the armature 122 is moved laterally (parallel to the driver) by an outside force. Thus, at any position of the armature 122, within its normal range of movement perpendicular to driver 115, the armature 122 may be moved by an external force in a direction parallel to driver 115 without the conductor of driver 115 or the conductor of controller 116 cutting any magnetic lines of force or changing the number and/or length of conductors in the magnetic field between the magnet pair 118 and 120.

Figure 6 illustrates a planar CED arrangement 123. Four elongated CED devices 124, 124a, 126 and 126a, each similar to the CED illustrated in Figure 5, are arranged in a cross array, with the respective magnet pairs 128, 128a, 130 and 130a fixed to a framework (not shown), and with the respective armatures 132, 132a, 134 and 134a fixed to each other with a cross-shaped drive bar 136, so that the armatures 132, 132a, 134 and 134a all move freely as a unit. The magnetic polarities of the magnet pairs 128 and 128a, as well as the electrical polarities and connections of their associated drivers 138 and 138a and controllers 140 and 140a, are so arranged that, when energized, the armatures 132 and 132a move as a unit in the same direction. In the same manner, magnetic and electrical polarities of armatures 134 and 134a are arranged so that they will move as a unit in the same direction. Armature pair 132 and 132a is energized and controlled from two sources of electricity (one source for both of the drivers 138 and 138a, and the other source for both of the controllers 140 and 140a), which sources of electricity are separate and different from the two sources of electricity which energize and control armature pair 134 and 134a (one source being for the drivers 139 and 139a, and the other source being for the controllers 141 and 141a).

Preferably, the four elongated CED devices 124, 124a, 126 and 126a which comprise the planar CED arrangement 123 are matched in size, shape and strength of magnetic field, in size, shape and conductivity of the controllers, in controller size, shape and length in the magnetic field, and in current flow direction, although any mismatch can be corrected electrically. If all four of the units are physically matched, all four controllers 140, 140a, 141 and 141a can be placed in the same electrical circuit, preferably in series, so that the same current flows in each, thereby insuring that the same resistive/restoring force is exerted by each. For the same reason, it is considered preferable that the respective pairs of drivers 138 and 138a, and 139 and 139a, each be in their own respective series circuits to insure uniform thrusts from each member of a pair. In this manner, if CED devices 124 and 124a are energized and CED devices 126 and 126a are not energized, motion will take place in the direction indicated by either arrow 142 or arrow 142a. In a like manner, if CED devices 126 and 126a are energized, motion will take place in the direction indicated by either arrow 144 or arrow 144a.

When all four CED devices 124, 124a, 126 and 126a are energized, motion will take place in a direction determined by the instantaneous vector addition of the force exerted by armature pair 134 and 134a, and the force exerted by armature pair 132 and 132a. If all the other physical and electrical characteristics are constant, the location of the center point 146 of drive bar 136 will be a function of the direction and amperage of the current in driver pair 138 and 138a, as well as that in driver pair 139 and 139a. It is clear that, by varying the direction and amperage of the electric current in each of the driver pairs 138 and 138a, and 139 and 139a, the center point 146 can be quickly and accurately placed at any point within the total range of movement of of planar CED device 123. It is also clear that any planar shape, regular or irregular, may be traced by center point 146 by controlling and varying the driver currents. For example, if a sinusoidal alternating current of a specific frequency and a specific maximum voltage is applied to driver pair 138 and 138a, and the same current, 90° out of phase, is simultaneously applied to driver pair 139 and 139a, center point 146 will trace a perfect circle, having a radius which is determined by the maximum voltage supplied, and having a speed of tracing which is a function of the frequency of the current.

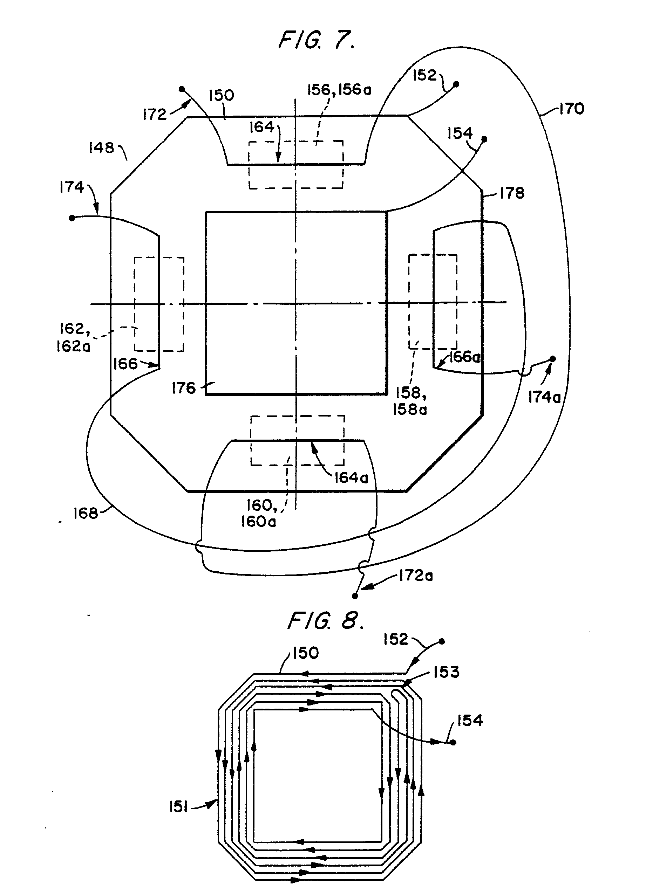

Instead of utilizing four discrete linear CED devices 124, 124a, 126 and 126a to constitute a planar CED arrangement 123, as shown in Figure 6, a planar CED device 148 as illustrated in Figure 7 may be provided. Such a planar CED device 148 comprises a single controller 150 which is energized through leads 152 and 154, as well as four congruent magnet pairs 156 and 156a, 158 and 158a, 160 and 160a, and 162 and 162a (which are shown by dotted outline) arranged with one polarity on one side of armature 178 and the opposite polarity on the other side of armature 178. One pair of drivers 164 and 164a is electrically connected in series by conductor 170 so that the current flow through each driver 164 and 164a is in the same direction relative to the magnetic lines of force. Similarly, driver pair 166, 166a is electrically connected in series by conductor 168 so that the current flow through each driver 166 and 166a is the same direction relative to the magnetic lines of force. Driver pairs 164 and 164a, and 166 and 166a, are energized by leads 172 and 172a, and 174 and 174a, respectively. The magnet pairs 156 and 156a, 158 and 158a, 160 and 160a, and 162 and 162a are fixed to a framework so as to constitute a stator. Fixed to the controller 150 is a driver bar 176, which, together with the drivers 164, 164a, 166 and 166a, comprises the armature 178.

The controller 150 is a single continuous conductor 151, in the form of a flat spiral, with all turns insulated from each other and from the drivers 164, 164a, 166, and 166a. The conductor 151 spirals back upon itself (at a point 153 which is not within, and cannot move into, a magnetic field), as shown schematically in Figure 8, in such a manner that half the turns rotate in one direction and half rotate in the opposite direction, with the segments which are or may be within a magnetic field being straight and parallel to each other and to their respective drivers 164, 164a, 166, and 166a, as previously described. In this manner, when energized through leads 152 and 154, the current in the conductor turns which lie on one side of any driver will flow in the direction opposite to the current in the conductor turns on the other side of that driver, in the same manner as shown in Figure 1. The length of the drivers 164, 164a, 166 and 166a, and the length of the straight, parallel segments of the controller 150, are such as to allow movement of the armature 178 in any planar direction in the manner illustrated in Figures 5 and 6.

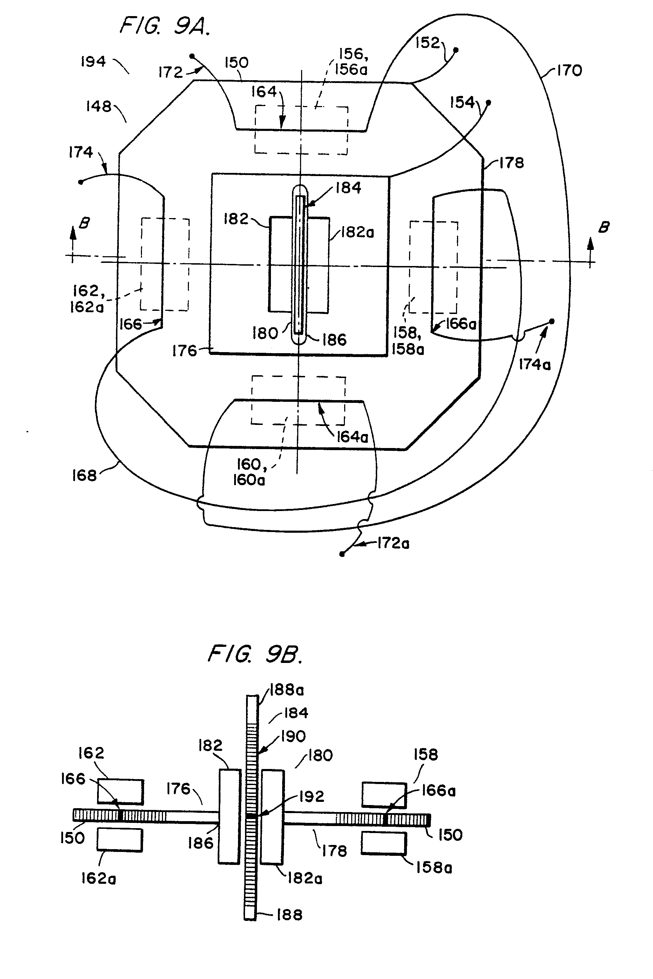

In Figures 9A and 9B, a linear CED device 180, similar to that shown in Figures 1 and 2, may be fixed to drive bar 176 at right angles to the plane of motion of the planar armature 178, with magnet pair 182 and 182a being fixed to drive bar 176, and with armature 184 of CED 180 being arranged to move freely at right angles to the plane of movement of armature 178 through slot 186 in drive bar 176, thus permitting three-dimensional movement of drive bars 188 and 188a fixed to armature 184.

In Figures 9A and 9B, CED device 180 is fixed at right angles to planar armature 178 so that CED device 180 may be moved to any location on a plane within the working range of planar CED device 148, while at the same time armature 184 of CED device 180 may be moved to a desired location in a direction perpendicular to the plane of motion of planar CED device 148. A tool, link or stylus, affixed to drive bars 188 and 188a, may then be rapidly and accurately moved to any point within the working range of three-dimensional CED device 194, or may be made to describe any three-dimensional curve or surface by the previously described motion of armature 184 and armature 178. It is clear that a multiplicity of linear CED devices may be fixed to a planar CED device at various angles to produce a multiplicity and variety of motions simultaneously and/or sequentially. It is also clear that planar CED devices may be formed in a variety of regular and irregular shapes and patterns. It is additionally clear that one or more planar CED devices may be fixed at right angles, or other angles, to other planar CED devices in order to further increase the variety of controlled movements. It is further clear that some shapes, such as circular-disc or annular-disc CED devices, may not produce linear force/displacement relationships, and that such non-linear devices may be used to fulfill special requirements.

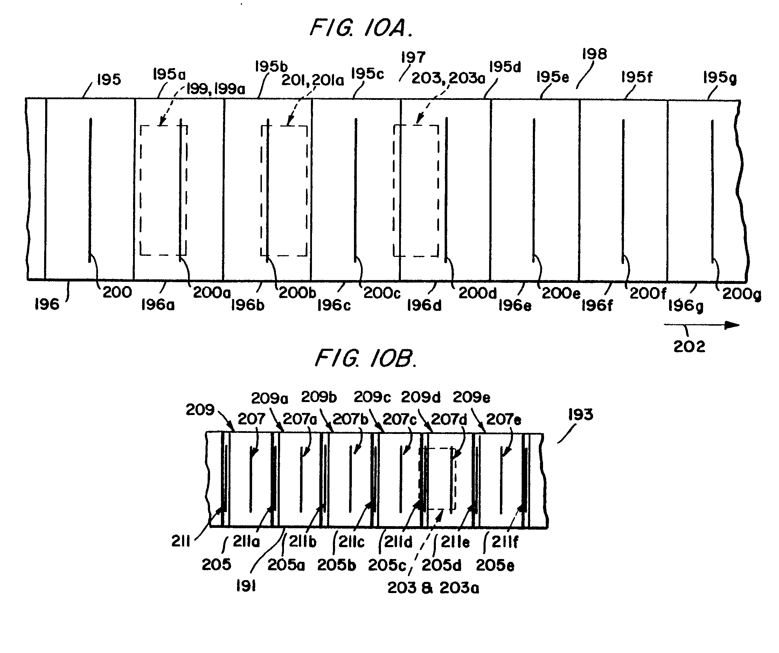

The CED devices illustrated above have been limited in range of movement. Continuous linear or loop controlled motion may be achieved by connecting a multiplicity of linear CED devices in tandem to form a continuus CED arrangement 197, as illustrated in Figure 10A. A multiplicity of armatures 195, 195a, 195b, 195c, 195d, 195e, 195f, 195g can have their respective controllers 196, 196a, 196b, 196c, 196d, 196e, 196f, 196g fixed rigidly together to form an armature bar 198, which is arranged to pass between three sets of identical stator magnet pairs 199 and 199a, 201 and 201a, and 203 and 203a, which are spaced so that the respective drivers 200, 200a, 200b, 200c, 200d, 200e, 200f, 200g will pass between them in a sequence which permits continuous controlled motion in one direction or the other. As illustrated in Figure 10A, the armature bar 198 moves to the right, in the direction indicated by arrow 202, due to the force generated by energizing armature 195a. Driver 200a is just about to leave the magnetic field between magnet pair 199 and 199a, while driver 200b has just entered the magnetic field of magnet pair 201 and 201a. At this instant, the current to armature 195a is shut off and the current to armature 195b is turned on with the appropriate direction and amperage to continue the controlled motion of armature bar 198 in the same direction and with the same speed as before.

In a similar manner, when driver 200b is about to leave the magnetic field between magnet pair 210 and 210a, driver 200c will just be entering the magnetic field between magnet pair 203 and 203a. As the motion continues, driver 200c is about to leave magnet pair 203 and 203a, as driver 200 has just entered magnet pair 199 and 199, and so on. This process will permit large amplitudes of continuous controlled motion in either direction, depending on the sequence of energization of the appropriate armatures and the direction of driver currents.

It is clear that, if the multiplicity of armatures are flexibly connected rather than rigidly connected, a linear or looped chain will result, which chain can move in either direction with accurately controlled rapid motion, provided that, where the chain pases through the stator magnetic fields, the several elements are kept in proper position and alignment by usual and well-known means. It is further clear that if, instead of properly spaced tandem magnet pairs, a set of properly offset stacked magnet pairs (similar to those illustrated in Figure 3) is used, a triple stacked chain (with the three chains fixed to each other to move as a unit) will also provide continuous movement. It is further clear that, in the stacked continuous chain, the magnet pairs may be in line and the armatures offset to provide the continuous motion.

Figure 10B illustrates a continuous CED device 193, which is similar to the continuous CED device 197 illustrated in Figure 10A, except that only one magnet pair 203 and 203a (which is slightly longer, in the direction of motion, than in a basic linear CED device) is used. A series of armatures 205, 205a, 205b, 205c, 205d, 205e are fixed together to form a bar 191, with their respective drivers 207, 207a, 207b, 207c, 207d, 207e and their respective controllers 209, 209a, 209b, 209c, 209d, 209e passing through the magnetic field between magnet pair 203 and 203a. In between the armatures 205, 205a, 205b, 205c, 205d, 205e are additional drivers 211, 211a, 211b, 211c, 211d, 211e, 211f which may be energized independently of each other and independently of drivers 207, 207a, 207b, 207c, 207d, 207e. The magnet pair 203 and 203a is sufficiently long, as measured in the direction of motion of the armature bar 191, so that, as driver 207d is leaving the magnetic field between magnet pair 203 and 203a, driver 211d is entering the magnetic field. With motion toward the right, in the direction shown by arrow 202, when driver 207d is denergized, driver 211d is energized with the appropriate amperage and direction of current flow, and, at the same time, the direction of current flow in controller 209d is reversed, and controller 209c is energized, with its current flow being in the direction opposite to the normal direction, so that the controlled movement to the right continues. To clarify, while armature 205d is within the magnetic field between magnet pair 203 and 203a, the normal direction of current flow in controller 209d is such that the current in the conductor turns to the left of driver 207d, tends to move the assembly to the left, away from driver 207d, and toward additional driver 211d. In a similar manner, the normal direction of current flow in controller 209c is such that the current in its conductor turns to the right of driver 207c tends to move the assembly to the right, away from its driver 207c, and toward additional driver 211d. If the normal direction of current flow in controllers 209c and 209d is reversed, then the portion of controller conductor turns of controller 209d which is to the right of additional driver 211d will tend to move the assembly to the right, away from additional driver 211d, and the portion of conductor turns of controller 209c which is to the left of additional driver 211d will tend to move the assembly to the left, away from additional driver 211d. It is clear that additional driver 211d, and its adjacent portions of controllers 209c and 209d, when properly energized, will themselves function as a basic linear CED device. In this manner, by sequentially energizing the appropriate drivers and the additional drivers with the appropriate amperages and directions of current flow, while energizing, and at the proper time reversing the direction of current flow in, the controllers adjacent to the additional drivers, controlled continuous motion will result.

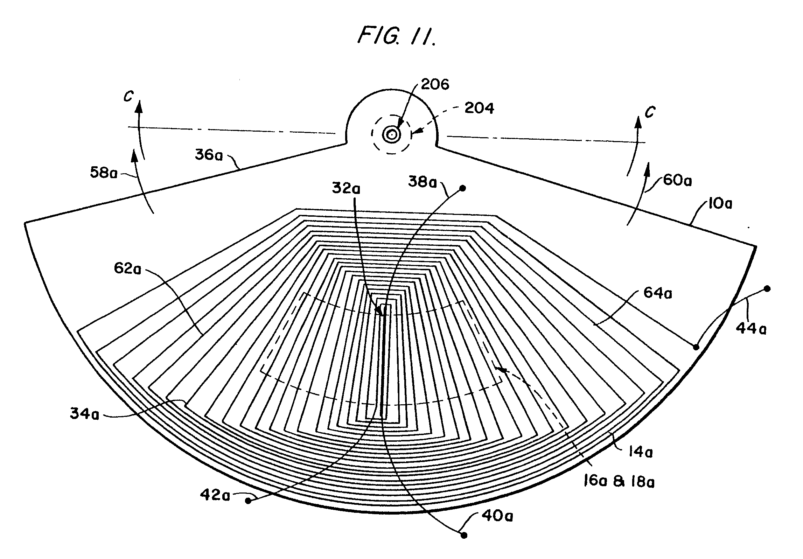

If the basic linear CED device 10 (which is illustrated in Figure 1) is bent, in the plane of motion, into an arc of a circle, similar to a segment of an annular disc, a CED devices 10a which will produce controlled motion along a circular arc is realized. (Because of the similarity, the same numbering system used for Figure 1 will be used for Figure 11, with the addition of suffixes.) In Figure 11, developed circular arc section C—C is similar to section A—A in Figure 1, and appears as in Figure 2.

Magnet pair 16a and 18a comprises an annular arc segment magnet, which is so polarized as to result in an attractive relationship between its poles, and which is so fixed that armature 14a moves freely between the poles. Armature 14a comprises straight radial driver 32a and curved controller 34a. Driver 32a is energized through leads 38a and 40a connected thereto. Controller 34a is energized through leads 42a and 44a connected thereto. The aforementioned electrical leads are preferably connected to slip rings 204, which are fixed to bearing 206, and around which the rotary CED device 10a rotates the driver bar 36a in the direction indicarted by arrow 58a or arrow 60a. The portions 62a and 64a of controller 34a, which may pass through the magnetic field between magnet pair 16a and 18a, have straight radial conductors, so that the thrust (which is at right angles to the conductor) is always tangential to an arc of a circle centered on bearing 206, and movement takes place along an arc of that circle.

It is clear that one or more additional rotary CED devices may be fixed to drive bar 36a in the same plane as CED device 10a so as to provide greater rotational force and to balance the rotating masses. It is further clear that a multiplicity of rotary CED devices may be stacked in a manner similar to that shown in Figure 3 so as to provide greater force. If, in such a stack of rotary CED devices, the CED devices are offset angularly with respect to each other, continuous controlled rotary motion may be achieved by energizing the proper rotary CED devices sequentially in a manner similar to that illustrated in Figure 10A and/or 10B. It is further clear that a linear, planar, and/or rotary CED device, or a multiplicity of such, may be fixed to a rotary CED device at right angles, or other angles, with respect to the plane of motion, to provide complex, three-dimensional motion.

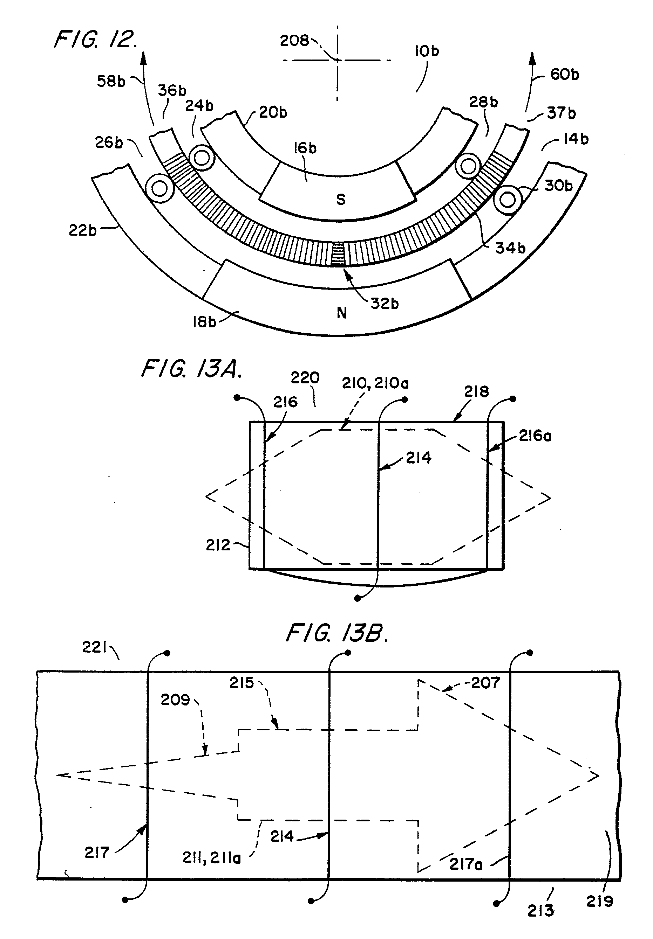

In Figure 12, a basic linear CED device, such as shown in Figure 2, is bent into the form of a right circular cylinder with the long axis of the cylinder parallel to the driver 32b, so that a rotary CED device 10b is formed. (Because of similarity, the same reference numerals used for Figures 1 and 2 are used for Figure 12, with the addition of suffixes.) Armature 14b comprises a striaght driver 32b which is parallel to the central axis 208 of the cylindrical section, curved controller 34b, and drive bars 36b and 37b, and is constrained to rotate along the directions indicated by arrows 58b and 60b by roller guides 24b, 26b, 28b and 30b within support framework 20b and 22b between magnet pair 16b and 18b. The armature 14b, when properly energized as hereinbefore described, makes controlled movements along the directions indicated by arrow 58b or arrow 60b. It is clear that one or more matching cylindrical CED devices, similar to CED device 10b, may be installed with axis 208 as a center, with the stator parts fixed to each other, and with the moving parts fixed to each other, so as to increase the force of the device and to balance the rotating masses. It is also clear that the several armatures can be electrically connected to slip rings at the center of rotation to energize the several drivers and controllers, and that the several parts may be so sized and offset relative to each other that they may be energized sequentially so as to provide continuous controlled rotary motion in a manner similar to that heretofore described. It is further clear that one or more linear, planar and/or rotary CED devices may be fixed at right angles, or other angles, with respect to the drive bars 36b and/or 37b to produce a variety of three-dimensional motions. Furthermore, if the planar CED device 148, shown in Figure 7, instead of the linear CED device 10 illustrated in Figure 2, were bent into the form of a segment of a right circular cylinder, the moving parts could move in a direction parallel to the long axis of the cylinder at the same time that they moved in a circumferential direction.

If, instead of bending the planar CED device 148, shown in Figure 7, into the shape of a right circular cylinder, it is bent into the shape of a segment of a sphere, controlled motion in any direction along the surface of the sphere can be achieved. It is clear that motion along any shape of constant curvature may be achieved in this manner. It is further clear that any of the combinations and variations previously described may be applied to a doubly-curved CED device. It is further clear that, with no current in the driver, any CED device will function as an essentially perfect spring, resisting motion in a controlled mode along any path within its range and path of motion.

Figure 13A illustrates an embodiment of the linear CED device which does not use a spiral conductor. The shaped-magnet CED device 220 has a magnet pair 210 and 210a, shown in dotted outline, which is shaped like a rectangle with a triangle at each end, the triangles preferably being isosceles triangles of equal dimensions, with the altitude to the base adjacent to the rectangular portion being, preferably, at least equal in length to the length of the rectangular portion measured in the direction of motion of the armature 212. The armature 212 comprises a driver 214 and a controller pair 216 and 216a, fixed together by a driver bar 218. The controller pair 216 and 216a comprises a pair of electrical conductors connected in series and energized with direct current in such direction of current flow that each conductor tends to move out of the magnetic field in a direction away from the driver and away from the other controller conductor. It is clear that, if the armature 212 is moved by an applied force to the right, controller conductor 216a will have a shorter length, and controller conductor 216 will have a proportionately longer length, of conductor between the magnet pair 210 and 210a, and that the thrust to the right, due to the interaction of the current in controller conductor 216a with the magnetic field between shaped-magnet pair 210 and 210a, will be less than the thrust to the left due to conductor 216. This difference is directly proportional to the displacement, thus producing another embodiment of the essentially perfect spring heretofore described.

If instead of supplying an outside displacing force, the displacing force is supplied by a current through the driver 214, which is controlled in amperage and direction of flow, another embodiment of the device of the invention is produced in the form of the shaped-magnet CED device 220. It is clear that this embodiment may be used in all the various manners and arrays heretofore described: tandem, stack, planar, three-dimensional, flat rotary, curved rotary, doubly-curved, etc. It is further clear that the shape of the end or middle portion of the magnets may be of various proportions, and may be placed in various locations with respect to each other, and, in order to achieve various force/displacement relationships, they may be of curved or irregular shape, or of other shapes, in plan and/or section.

Figure 13B illustrates an asymmetrical-shaped-magnet CED device 221, which is similar to the shaped-magnet CED device 220, except that the non-rectangular ends 207 and 209 of magnet pair 211 and 211a are shaped differently from each other, and that the controllers 217 and 217a are connected independently of each other to a source of electricity, rather than being connected in series. In Figure 13B, for illustration, the base of the triangular end section 209 of magnet pair 211 and 211a, which is directly adjacent to the rectangular section 215 of magnet pair 211 and 211a, is half the width, measured in a direction parallel to the driver 214, of the central rectangular section 215, and similarly, the base of triangular section 207 is twice the width of rectangular section 215. The length of conductor of controller 217 within the magnetic field of end section 209 is one-quarter of the length of the conductor of controller 217a within the magnetic field of end section 207 at any position of the armature 213 within the working range of asymmetrical-shaped-magnet CED device 221. For equilibrium, and for the proper functioning of the device as a CED device, the current in controller 217 will have to be four times as great as the current in controller 217a, with due consideration being given to the length of each conductor influenced by the end spillages of the magnetic field. Thus, it is clear that, if an asymmetric stator magnet pair is used, whether by design or by inaccuracy of manufacture, the CED device can easily be made to function properly by adjusting the electric currents in the several conductors.

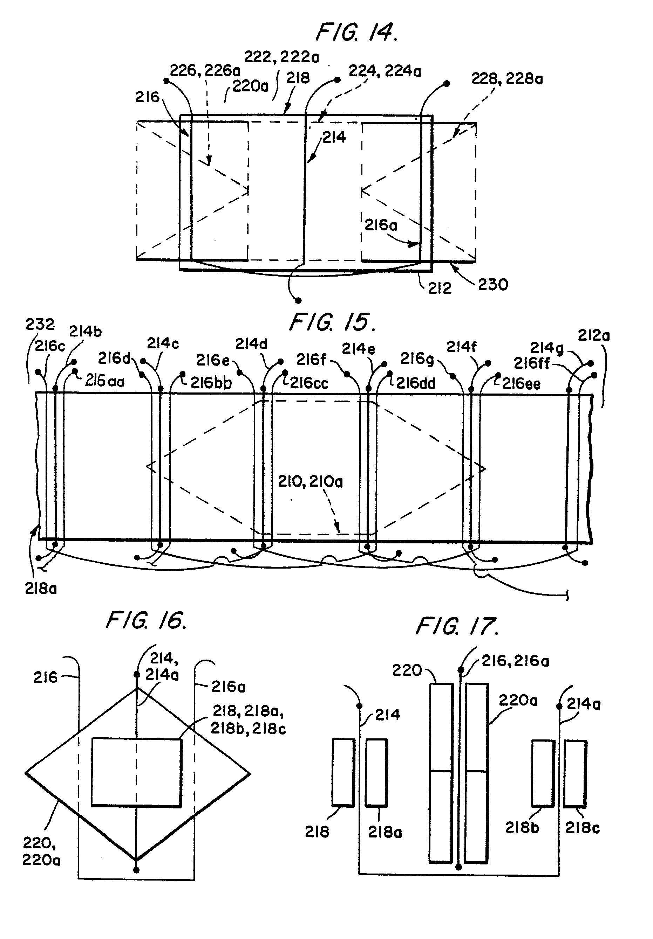

Figure 14 illustrates a variation of the shaped-magnet CED device 220 shown in Figure 13A. The shaped-magnet pair 222 and 222a comprises a pair of rectangular sections 224 and 224a, flanked by a pair of matching triangular sections 226 and 226a, and 228 and 228a, and fixed together by framework 230, with the apices of the triangular magnet sections 226 and 226a, and 228 and 228a, pointing inwardly toward the rectangular magnet section 224 and 224a. All magnet sections are shown in dotted outline for clarity. The armature 212 comprises driver 214 and controller pair 216 and 216a, fixed together by a drive bar 218. (Where there is no elemental change, the same reference numerals are used in Figure 13A are used in Figure 14 since, with the exception of the direction of end magnet apices and controller current direction, the two devices are similar.) The controller pair 216 and 216a is energized so that the thrust on each controller conductor 216 and 216a is towards the driver 214, and towards each other, so that, if force is applied to the armature 212 so as to move it to the right, the length of controller conductor 216a in the magnetic field between triangular magnet sections 228 and 228a will be greater than the length of controller conductor section 216 in the magnetic field between triangular magnet sections 226 and 226a. Therefore, the thrust toward the left will be greater than the thrust to the right in direct proportion to the displacement. If the displacing force is supplied by an electric current through the driver 214, which current is controlled in amperage and direction of flow, another embodiment of a shaped-magnet CED device 220a is produced. It is clear that this embodiment may be used in the same manner and in the same array that shaped-magnet CED device 220 is used. For simplicity, when the term shaped-magnet CED device is used, the shaped-magnet CED device 220 of Figure 13 is intended and is to be considered.

Figure 15 illustrates a rod or chain shaped-magnet CED device 232 which is similar to the continuous CED device 197 illustrated in Figure 10. A series of drivers 214b, 214c, 214d, 214e, 214f and 214g, with their respective controller pairs 216b and 216bb, 216c and 216cc, 216d and 216dd, 216e and 216ee, 216f and 216ff, and 216g and 216gg, which are similar to the assembly of driver 214 and controller 216 and 216a illustrated in Figure 13A, are arranged in an overlapping array and are fixed to drive bar 218a to constitute an armature 212a. Since the several conductors are all single conductors, the array may be fixed in a single layer or plane, even though overlapped. The armature 212a is arranged to move freely between the shaped-magnet pair 210 and 210a. The spacing of the several drivers and their controllers is such that controlled continuous linear or loop motion in either direction is available. In Figure 15, armature 212a is moving toward the right under the thrust of driver 214e, and is controlled by controller conductor 216e and 216ee. A driver 214e is about to leave the area between the rectangular sections of shaped-magnet pair 210 and 210a, and its respective controller conductors 216e and 216ee are about to leave the area between the triangular sections of magnet pair 210 and 210a, driver 214d has just entered the area between the rectangular section of shaped magnet pair 210 and 210a, and its respective controller conductors 216d and 216dd have just entered their respective areas between the triangular sections of shaped-magnet pair 210 and 210a. If the electric current provided to driver 214e and its respective controller conductors 216e and 216ee is cut off and if, simultaneously, driver 214d and its controllers 216d and 216dd are appropriately energized, the armature 212a will continue its controlled movement to the right. In a like manner, if the other driver/controller elements are sequentially energized, controlled movement will continue in the desired direction. It is clear that, in any embodiment of the continuous CED device, a multiplicity of stator magnet assemblies may be used in tandem or stacked array to increase the resultant force achieved thereby.

In Figure 13A, the shaped-magnet CED device is three times as long as the amplitude of motion, measured in the direction of motion. In Figure 2, the basic linear CED device is twice as long as the amplitude of motion similarly measured. Figures 16 and 17 illustrate a shaped-magnet CED device which is only twice as long as the amplitude of motion. Referring to Figure 13A, it is noted that the driver 214 moves only within the rectangular portion of shaped-magnet pair 210 and 210a. The controllers 216 and 216a travel only within the triangular portions of shaped-magnet pair 210 and 210a. By separating the rectangular and the triangular portions, and by stacking them vertically, the device can be shortened in the direction of motion. In Figure 16, the plan view, and Figure 17, the right side view, rectangular magnet pairs 218 and 218a, and 218b and 218c, have drivers 214 and 214a, respectively, between them. The triangular sections are placed base-to-base to form a rhomboidal shaped-magnet pair 220 and 220a with controllers 216 and 216a being between the pair of magnets. The controllers 216 and 216a and the drivers 214 and 214a are fixed together by a drive bar (which, for the sake of clarity, is not shown).

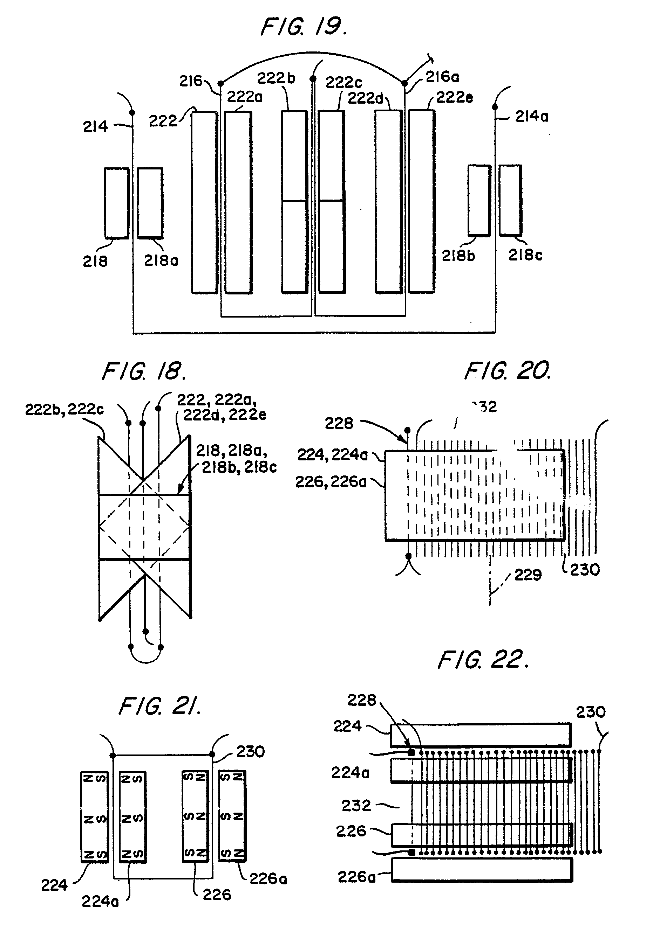

In a similar manner, Figures 18 (plan view) and 19 (right hand view) illustrate a shaped-magnet CED device having a length which is the same as the amplitude of motion, measured in the direction of motion. The rhomboidal shaped-magnet pair 220 and 220a, shown in Figure 16, is divided into triangular magnet pairs 222 and 222a, 222b and 222c, and 222d and 222e, which are stacked between rectangular magnet pairs 218 and 218a, and 218b and 218c, in a balanced array. The center triangular magnet pair 222b and 222c is stacked between the outer triangular magnet pairs 222 and 222a, and 222d and 222e, and is rotated 180 degrees with respect to these outer magnet pairs so that its apices point in a direction opposite to that of the others. Drivers 214 and 214a are between the rectangular magnet pairs 218 and 218a, and 218b and 218c, respectively, while controllers 216 and 216a are between triangular magnet pairs 222 and 222a, and 222d and 222e, respectively, and both controllers 216 and 216a pass between the center triangular magnet pair 222b and 222c, arrayed so that there will be equal thrusts in both directions, and so that there will be no unbalanced moments. The moving parts are fixed together by a drive bar (not shown).

The basic linear CED device, shown in Figures 1 and 2, can be modified so that the length of the device is the same as the amplitude of motion, as illustrated in Figures 20, 21, 22 and 23, which are a plan view, a right hand view, a front elevation view, and a left hand view, respectively, of the device. Two pairs of bar magnets 224 and 224a, and 226 and 226a, are fixed parallel, adjacent and congruent with respect to each other, and also in attractive polarity with respect to each other. The facing sides of magnets 224a and 226 have the same polarity, as shown, so that the direction of the magnetic lines of force between magnets 224 and 224a is opposite to that of magnet pair 226 and 226a. A driver 228 is arranged between magnet pair 224 and 224a, and passes between magnet pair 226 and 226a in a direction opposite to the direction in which it passes between magnet pair 224 and 224a. In a similar manner, the controller 230 is arranged as a continuous conductor making a generally rectangular spiral between magnet pairs 224, 224a and 226, 226a, so that it passes in one direction between magnet pair 224 and 224a, and in the opposite direction between magnet pair 226 and 226a. Driver 228 and controller 230 are fixed to each other by a drive bar (not shown) to form an armature 232. When the driver 228 is energized, it tends to move either to the right or to the left, depending on the direction of current flow. The controller 230 is energized so that it will move in a direction away from the driver 228, which, in Figure 20, is to the right. The driver 228 is initially energized by a biasing current having a direction which is such that it tends to move the driver 228 in a direction away from the controller 230, that is, to the left in Figure 20. The amperage of the current in the driver 228 and the controller 230 is such that, when the armature 232 is in its initial equilibrium position (that is, with the driver 228 at the transverse center line 229 of magnet pairs 224 and 224a, and 226 and 226a), and when one-half of the controller extends to the right from between the magnet pairs 224 and 224a and 226 and 226a, the CED device is in equilibrium. If the current in the controller 230 is kept constant, the armature 232 may be moved to the left or to the right by increasing or decreasing the current in the driver 228.

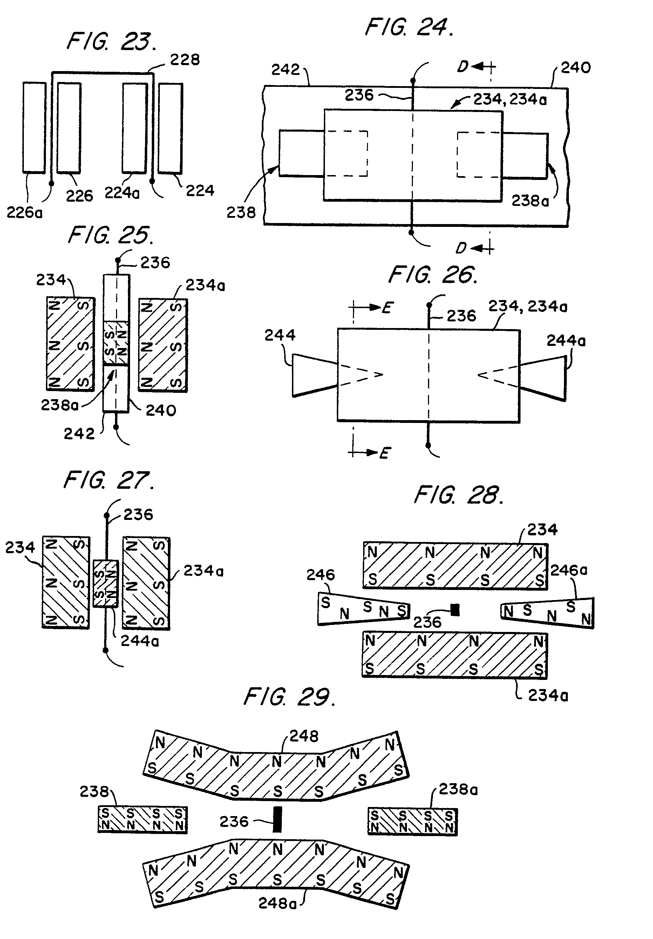

Figures 24 and 25 illustrate a magnet-controller CED device wherein the controller comprises magnets, preferably bar magnets. A magnet pair 234 and 234a is fixed in an adjacent, parallel, congruent array and in attractive polarity with respect to a driver 236, the latter being arranged between the magnet pair 234 and 234a, as heretofore described. The driver 236 is fixed to a drive bar 240, along with a pair of matched controller magnets 238 and 238a, which are in repulsive polarity with respect to the stator magnet pair 234 and 234a. When the driver 236 is at its center equilibrium position, the controller magnets 238 and 238a are half in and half out of the magnetic field between the magnet pair 234 and 234a. Since the controller magnets 238 and 238a are in repulsive polarity with respect to the adjacent faces of magnetic pair 234 and 234a, each controller magnet 238 and 238a tends to move out of the magnetic field away from the magnet pair 234 and 234a, and therefore away from the driver 236, and away from each other. Controller magnet 238 tends to move to the left, and controller magnet 238a tends to move to the right. The greater the length of a magnet in a repulsive field, the greater the thrust which tends to move it out of the field. The more controller magnet 238 moves to the right, the more of it is in the magnetic field, and thus the greater is the force moving it to the left. Similarly, the more that controller magnet 238a moves to the right, the less of it is in the magnetic field, and the smaller is in the force that tends to move it to the right. Thus, if armature 242 is moved to the right due to the current in the driver 236, the restoring force increases due to the imbalance of controller magnets 234 and 234a.

Figures 26 and 27 illustrate another embodiment of the magnet-controller CED device, in which all elements of the device shown in Figures 24 and 25 are the same, except that the controller magnets 244 and 244a are of triangular shape in plan. This increases the change in repulsive forces acting on the controller magnets 246 and 246a due to their being at greater or lesser depth in the magnetic field.

Figure 28 illustrates another embodiment of the magnet-controller CED device, wherein all elements of the device are the same as that shown in Figures 24 and 25, and/or Figures 26 and 27, except that the cross-section of the controller magnets 246 and 246a is triangular, or of other shape which is not rectangular. This further increases the rate of change of magnetic repulsive force acting on the controller magnets 246 and 246a as they are moved into or out of the magnetic field.

Figure 29 illustrates another embodiment of the magnet-controller CED device, wherein the elements of the device shown in Figures 24 and 25, and/or Figures 26 and 27, and/or Figure 28, are the same, except that the magnet pair 248 and 248a is not of rectangular cross-section. This serves to further increase and change the rate of change of magnetic repulsive forces acting on the magnet-controllers 238 and 238a as they are forced deeper into, or further out of, the magnetic field. It is clear that there are a variety of cross-sectional shapes of stator magnets which may be used with any of the controllers described heretofore, and which may be used to provide a variety of types of motion.

It is clear that, in all magnet controller CED devices, the stator magnets and the controller magnets may be of the same polarity without changing the operation or effectiveness of the CED device. That is, if the stator magnets are arrayed in repulsion (for example, with adjacent faces having N polarity), and the controller magnets are N poles, the outward thrusts on the controller magnets will still be the same function of the displacement as in the devices previously shown, in which devices the stator magnets were arrayed in attractive relationship and the adjacent faces of the magnet controllers were in repulsive polarity with respect to the adjoining faces of the stator magnets.

It is finally clear that, in any of the devices shown, the armature may be fixed and the stator may move.

While preferred forms and arrangements have been shown in illustrating the invention, it is to be understood that various modifications would be obvious to one of skill in the art, and that the scope of the invention is only limited by the appended claims.

## Claims

1. A controlled electric device including a pair of magnetic poles (18, 16) of different polarity arranged adjacent to each other so as to have a relatively narrow gap therebetween and a controller conductor means (34) for receiving a control current, said device characterized in that said magnetic poles provide an essentially uniform magnetic field (52) defined by magnetic lines of force having a first direction and in that there is included a driver conductor means (32) disposed in said gap and having a long axis in a second direction perpendicular to said first direction for receiving a driver current, said driver conductor means being responsive to said driver current and to said magnetic lines of force so as to be moved from an original position in a third direction at a right angle to said first and second directions, and in that said controller conductor means is fixed to said driver conductor means and is insulated from it, said controller conductor means (34) having first (62) and second (64) portions disposed on either side, in a direction parallel to said second direction, of said driver conductor means, and so arranged that current flowing in said first portion (62) flows in a direction opposite to current flowing in said second portion (64), said controller conductor means being connected to said driver conductor means so that, when said driver conductor means is moved, said controller means is operative to effect controlled changes in linear motion of said conductor means along said third direction.

2. The device of claim 1, wherein said controller means tends to restore said driver conductor means to its original position in said magnetic field in response to said control current.

3. The device of claim 1 or 2, wherein said gap has a length in said third direction which is greater than the length of said driver conductor means (32) in said third direction and, when movement of said driver conductor means (32) in said third direction takes place, said driver conductor means remains in said uniform magnetic field.

4. The device of claim 1 or 2, wherein said controller conductor means (34) comprises an electrical conductor in the form of a planar, generally rectangular spiral.

5. The device of claim 1 or 2, wherein said controller conductor means (34) comprises a conductor having a plurality of conductor turns, electrically insulated from each other, said conductor turns being divided into two portions (62, 64) disposed on each side of, and insulated from, said driver conductor means (32).

6. The device of claim 5, wherein said portions (62, 64) of said controller conductor means have an equal number of turns.

7. An arrangement wherein at least two devices according to claim 1 or 2 are included and arranged in a planar array (Fig. 6 — 124, 126) at a given angle with respect to each other, whereby to provide complex planar motion.

8. The arrangement of claim 7, wherein said at least two devices (Fig. 98, 150) comprise a planar array of devices and includes an additional device (188) fixed at a given angle to said planar array of devices, whereby to provide three-dimensional motion.

9. The device of claim 1 or 2, wherein said device is curved in a shape.

10. The device of claim 1 or 2, wherein said device functions as an electric spring having a displacement which is directly proportional to an applied load.

11. The device of claim 1 or 2, wherein said pair of magnetic poles comprises two magnetic poles which are at least one of non-flat or non-rectangular (Figs. 12—18, 26—29) configuration.

12. The device of claim 1 or 2, wherein said pair of magnetic poles forms an annular arc segment magnet (Fig. 12, 16b, 18b), said driver conductor means comprises a straight radial driver (32b), and said controller conductor means comprises a curved controller (34b), wherein controlled angular rotary motion is achieved.

13. The device of claim 1 or 2, wherein said pair of magnetic poles and said controller conductor means (34b — Figure 12) are configured to form a circular cylinder having a long axis parallel to said driver conductor means (32b), whereby said device comprises a rotary device.

14. A controlled electric drive arrangement comprising a plurality of devices as recited in claim 1 or 2, wherein a first device of said plurality of devices has said pair of magnetic poles (16b, 18b) and said controller conductor means (34b — Figure 12), configured to form a right circular cylinder having a long axis (208) parallel to said driver conductor means (208) parallel to said driver conductor means (32B), whereby said first device forms a rotary device, and wherein a second device of said plurality of devices is connected to said first device in a given angular relationship, whereby said arrangement provides complex, three-dimensional motion.

15. The device of claim 1 or 2, wherein said pair of magnetic poles are shaped into the form of a rectangle with a triangle at each end (Figs. 13A, B, 210, 215), said first and second portions of said controller conductor means comprising a pair of conductors (216, 216a) connected in series and energized with direct current in such direction of current flow that each of said conductors tends to move out of the magnetic field in a direction away from said driver conductor means and away from the other conductor.

16. A controlled electric drive arrangement comprising a plurality of devices as recited in claim 15.

17. The device of claim 1 or 2, wherein said pair of magnetic poles are shaped into the form of a rectangle with triangles of unequal size (Figs. 13B, 207, 209) at each end, said first and second portions of said controller conductor means (217, 217a) comprising a pair of conductors including individual conductors, and means for supplying control currents to said individual conductors separately.

18. The device of claim 1 or 2, wherein said pair of magnetic poles are shaped into the form of a rectangle with a triangle (226, 228 — Figure 14) at each end, each said triangle pointing inwardly toward said rectangle, said first and second portions of said controller conductor means (216, 216a) comprising a pair of conductors energized so that the conductors are moved toward the driver conductor means (214) and toward each other.

19. The device of claim 1 or 2, wherein said pair of magnetic poles are shaped into the form of a rectangle with a triangle at each end (Fig. 15, 210), said driver conductor means (214) comprising a plurality of devices spaced along said gap, said controller conductor means (216) comprising a plurality of pairs of controllers spaced along said gap, each driver having a pair of controllers, with each pair of controllers of a particular driver including a first controller located in proximity to one of said drivers which is located to one side of its driver, and a second controller located in proximity to another one of said drivers which is located to the other side of its driver being positioned in proximity to a first controller of one pair of controllers and a second controller of another pair of controllers.

20. An arrangement of devices, wherein there are included a plurality (Fig. 4) of controlled electric driver devices, as set forth in claims 1 or 2, wherein, in regard to each device: the said pair of magnetic poles (16, 18) forms a stator and said driver (110, Fig. 4) forms an armature and wherein said controller is adjacent to said driver, and wherein said first and second portions are disposed in a direction parallel to said second direction, whereby said controllers of said armatures of said plurality of said device are connected together to form an armature bar (114), said armature bar being arranged to pass between said pairs of magnetic poles of said stators of said devices, said pairs of magnetic poles being spaced apart so that said drivers of said armatures of said devices pass between said pairs of magnetic poles in such sequence as to provide continuous controlled motion of said armature bar.

21. A controller electric drive arrangement according to claim 1 or 2, wherein there is included a plurality of drivers (Fig. 4, 110) disposed in the said gap, and in that there is included a plurality of respective controllers (34) adjacent to respective said drivers and insulated therefrom for receiving a control current, said respective controllers having first (62) and second (64) portions disposed on either side, in a direction parallel to said second direction, of respective said drivers, and so arranged that current flowing in said first portion flows in a direction opposite to current flowing in said second portion, each said respective controllers (34) being connected to a respective said driver (110) so that, when said respective driver is moved, said respective controller tends to restore said respective driver to its original position in said magnetic field in response to said control current.

22. A controlled electric device according to claim 1, wherein said first (62) and second (64) portions of said controller conductor means (34) are so arranged in said magnetic field that current flowing in said first portion (62) tends to move said first portion out of the magnetic field in a direction away from said second portion (64), and current flowing in said second portion tends to move said second portion out of the magnetic field in a direction away from said first portion.

23. A controlled electric drive device including a pair of magnetic poles (234, 234a) disposed adjacent to each other so as to have a relatively narrow gap extending in a first direction therebetween, characterized in that it further comprises a driver conductor (236) means disposed in said gap and having an axis in a second direction, perpendicular to said first direction, for receiving a driver current flowing in said second direction, said driver conductor means (236) being responsive to said driver current so as to be moved from an original position in a third direction at a right angle to said first and second directions; and controller means (238, 244, 246 — Figures 24 to 29) comprising a pair of magnets (e.g. 238, 238a) disposed in said gap, said magnets of said pair of magnets being disposed on respective opposite sides, in said third direction, of said driver conductor means (236), said controller means (238, 238a (being connected to said driver conductor means (236) so that, when said driver conductor means is moved, said controller means is operative to effect controlled changes in linear motion means along said third direction.

24. The device of claim 23, wherein said controller means (216, 216a) tends to restore said driver conductor means (214) to its original position in the magnetic field created by the pair of magnetic poles (234, 234a).

25. The device of claim 24, wherein said pair of magnets comprises triangular-shaped magnets (244, 244a) said magnets having apices pointing in opposite directions.

26. The device of claim 24, wherein said pair of magnets comprises two magnets (246, 246a) of non-rectangular cross-section.

27. The device of claim 24, wherein said pair of magnetic poles comprises two magnets (248, 248a) of non-rectangular cross-section.

28. The device of claim 24, wherein said pair of magnetic poles (234, 234a) provides an essentially uniform magnetic field defined by magnetic lines of force extending in said first direction.

29. The device of claim 24, wherein said pair of magnetic poles are arranged in repulsive polarity.

30. The device of claim 29, wherein said pair of magnets of said controller means (34) have the same polarity.

31. The device of claim 30, wherein said pair of magnets of said controller means (34) have the same polarity as said pair of magnetic poles (16, 18).

32. The device of claim 24, wherein the polarity of faces of the magnets of the controller means (238, 238a) is in repulsive polarity with respect to the polarity of faces of said pair of magnetic poles (234, 234).

**Patentansprüche**

1. Gesteuerte elektrische Vorrichtung mit einem Paar von Magnetpolen (18, 16) verschiedener Polarität, die nebeneinander so angeordnet sind, daß sie dazwischen einen relativ schmalen Spalt haben, und einer Steuerleitereinrichtung (34) zum Aufnahmen eines Steuerstromes, welche Vorrichtung dadurch gekennzeichnet ist, daß die Magnetpole ein im wesentlichen gleichförmiges Magnetfeld (52) liefern, das durch magnetische Kraftlinien mit einer ersten Richtung bestimmt ist, und daß eine Treiberleitereinrichtung (32) vorgesehen ist, die im Spalt angeordnet ist und eine lange Achse in einer zweiten Richtung senkrecht zur ersten Richtung aufweist, um einen Treiberstrom aufzunehmen, wobei die Treiberleitereinrichtung auf den Treiberstrom und auf die magnetischen Kraftlinien so anspricht, daß sie aus einer Ausgangslage in eine dritte Richtung im rechten Winkel zur ersten und zweiten Richtung bewegt wird, und daß die Steuerleitereinrichtung an der Treiberleitereinrichtung befestigt und ihr gegenüber isoliert ist, wobei die Steuerleitereinrichtung (34) einen ersten (62) und einen zweiten (64) Teil aufweist, die in einer Richtung parallel zur zweiten Richtung auf beiden Seiten der Treiberleitereinrichtung liegen und so angeordnet sind, daß der im ersten Teil (52) fließende Strom in eine Richtung fließt, die dem in dem zweiten Teil (64) fließenden Strom entgegengesetzt ist, und die Steuerleitereinrichtung mit der Treiberleitereinrichtung so verbunden ist, daß dann, wenn die Treiberleitereinrichtung bewegt wird, die Steuerleitereinrichtung so arbeitet, daß gesteuerte Änderungen in der Linearbewegung der Treiberleitereinrichtung längs der dritten Richtung bewirkt werden.

2. Vorrichtung nach Anspruch 1, bei der die Steuerleitereinrichtung dazu neigt, die Treiberleitereinrichtung in ihre Ausgangslage im Magnetfeld auf den Steuerstrom ansprechend zurückzuführen.

3. Vorrichtung nach Anspruch 1 oder 2, bei der der Spalt eine Länge in der dritten Richtung hat, die größer als die Länge der Treiberleitereinrichtung (32) in der dritten Richtung ist, und dann, wenn die Bewegung der Treiberleitereinrichtung (32) in die dritte Richtung stattfindet, die Treiberleitereinrichtung im gleichförmigen Magnetfeld bleibt.

4. Vorrichtung nach Anspruch 1 oder 2, bei der die Steuerleitereinrichtung (34) einen elektrischen Leiter in Form einer ebenen im wesentlichen rechteckigen Spirale umfaßt.

5. Vorrichtung nach Anspruch 1 oder 2, bei der die Steuerleitereinrichtung (34) einen Leiter mit einer Vielzahl von Leiterwindungen umfaßt, die elektrisch gegeneinander isoliert sind, wobei die Leiterwindungen in zwei Teile (62, 64) unterteilt sind, die auf jeder Seite der Treiberleitereinrichtung (32) angeordnet und ihr gegenüber isoliert sind.

6. Vorrichtung nach Anspruch 5, bei der die Teile (62, 64) der Steuerleitereinrichtung eine gleiche Anzahl von Windungen haben.

7. Anordnung mit wenigstens zwei vorrichtungen nach Anspruch 1 oder 2, die in einer ebenen Form (Fig. 6 — 124, 126) unter einem gegebenen Winkel zueinander angeordnet sind, wodurch eine komplexe, ebene Bewegung geliefert wird.

8. Anordnung nach Anspruch 7, bei der die wenigstens zwei Vorrichtungen (Fig. 9B, 150) eine ebene Anordnung von Vorrichtungen umfassen und eine zusätzliche Vorrichtung (188) aufweisen, die unter einem gegebenen Winkel zur ebenen Anordnung der Vorrichtung angebracht ist, wodurch eine dreidimensionale Bewegung geliefert wird.

9. Vorrichtung nach Anspruch 1 oder 2, wobei die Vorrichtung in einer Form gekrümmt ist.

10. Vorrichtung nach Anspruch 1 oder 2, wobei die Vorrichtung als elektrische Feder arbeitet, deren Verstellung direkt proportional zu einer anliegenden Last ist.

11. Vorrichtung nach Anspruch 1 oder 2, bei der das Paar von Magnetpolen zwei Magnetpole umfaßt, die wenigstens eine nicht flache oder eine nicht rechtwinklige Form (Fig. 12 — 16, 26—29) haben.

12. Vorrichtung nach Anspruch 1 oder 2, bei der das Paar von Magnetpolen einen Ringbogensegment-Magneten (Fig. 12, 16b, 18b) bildet, wobei die Treiberleitereinrichtung einen geraden radialen Treiber (32b) umfaßt und die Steuerleitereinrichtung einen gekrümmten Steuerleiter (34b) umfaßt, womit eine gesteuerte Winkeldrehbewegung erzielt wird.

13. Vorrichtung nach Anspruch 1 oder 2, bei der das Paar von Magnetpolen und die Steuerleitereinrichtung (34b — Fig. 12) so geformt sind, daß ein Kreiszylinder gebildet ist, der eine lange Achse parallel zur Treiberleitereinrichtung (32b) hat, wodurch die Vorrichtung eine Drehvorrichtung umfaßt.

14. Gesteuerte elektrische Antriebsanordnung, welche eine Vielzahl von Vorrichtungen nach Anspruch 1 oder 2 umfaßt, wobei eine erste Vorrichtung der Vielzahl von Vorrichtungen das Paar von Magnetpolen (16b, 18b) aufweist, und die Steuerleitereinrichtung (34b — Fig. 12) so geformt ist, daß ein gerader Kreiszylinder mit einer langen Achse (208) parallel zur Treiberleitereinrichtung (32b) gebildet ist, so daß die erste Vorrichtung eine Drehvorrichtung bildet, und wobei eine zweite Vorrichtung der Vielzahl von Vorrichtungen mit der ersten Vorrichtung in einer gegebenen Winkelbeziehung verbunden ist, wodurch die Anordnung eine komplexe, dreidimensionale Bewegung liefert.

15. Vorrichtung nach Anspruch 1 oder 2, bei der das Paar von Magnetpolen in Form eines Rechteckes mit einem Dreieck an jedem Ende (Fig. 13A, B, 210, 215) geformt ist, wobei der erste und der zweite Teil der Steuerleitereinrichtung ein Paar von Leitern (216, 216a) umfassen, die in Reihe geschaltet sind und mit einem Gleichstrom in einer derartigen Stromrichtung versorgt werden, daß jeder Leiter dazu neigt, sich aus dem Magnetfeld heraus in eine Richtung von der Treiberleitereinrichtung und vom anderen Leiter weg zu bewegen.

16. Gesteuerte elektrische Antriebsanordnung, welche eine Vielzahl von Vorrichtungen nach Anspruch 15 umfaßt.

17. Vorrichtung nach Anspruch 1 oder 2, bei der das Paar von Magnetpolen in Form eines Rechteckes mit Dreiecken ungleicher Größe (Fig. 13B, 207, 209) an jedem Ende geformt ist, wobei der erste und der zweite Teil der Steuerleitereinrichtung (217, 217a) ein Paar von Leitern einschließlich einzelner Leiter und Einrichtungen zum Liefern von Steuerströmen getrennt zu den einzelnen Leitern umfassen.

18. Vorrichtung nach Anspruch 1 oder 2, bei der das Paar von Magnetpolen in Form eines Rechteckes mit einem Dreieck (226, 228 — Fig. 14) an jedem Ende geformt ist, wobei jedes Dreieck nach innen zum Rechteck zeigt und der erste und der zweite Teil der Steuerleitereinrichtung (216, 216a) ein Paar von Leitern umfassen, die so mit Strom versorgt werden, daß die Leiter zur Treiberleitereinrichtung (214) und zueinander bewegt werden.

19. Vorrichtung nach Anspruch 1 oder 2, bei der das Paar von Magnetpolen in Form eines Rechteckes mit einem Dreieck an jedem Ende (Fig. 15, 210) geformt ist, wobei die Treiberleitereinrichtung (214) eine Vielzahl von Einrichtungen im Abstand entlang des Spaltes umfaßt, die Steuerleitereinrichtung (216) eine Vielzahl von Paaren von Steuerleitern im Abstand längs des Spaltes umfaßt, jeder Treiber ein Paar von Steuerleitern hat, jedes Paar von Steuerleitern eines gegebenen Treibers einen ersten Steuerleiter, der nahe an einem der Treiber angeordnet ist, der auf einer Seite seines Treibers liegt, und einen zweiten Steuerleiter umfaßt, der in der Nähe des anderen Treibers angeordnet ist, der sich auf der anderen Seite seines Treibers befindet, und jeder Treiber in der Nähe eines ersten Steuerleiters eines Paares von Steuerleitern und eines zweiten Steuerleiters eines anderen Paares von Steuerleitern liegt.

20. Anordnung von Vorrichtungen mit einer Vielzahl (Fig. 4) von gesteuerten elektrischen Antriebsvorrichtungen nach Anspruch 1 oder 2, bei der bezüglich jeder Vorrichtung das Paar von Magnetpolen (16, 18) einen Stator und der Treiber (110, Fig. 4) einen Anker bildet, der Steuerleiter neben dem Treiber liegt, und der erste und der zweite Teil in einer Richtung parallel zur zweiten Richtung angeordnet sind, wobei die Steuerleiter der Anker der Vielzahl von Vorrichtungen miteinander zur Bildung eines Stabankers (114) verbunden sind, der Stabanker so angeordnet ist, daß er zwischen den Paaren von Magnetpolen der Statoren der Vorrichtungen hindurchgeht, und die Paare von Magnetpolen einen derartigen Abstand voneinander haben, daß die Treiber der Anker der Vorrichtungen zwischen den Paaren von Magnetpolen in einer derartigen Folge hindurchgehen, daß eine durchgehende gesteuerte Bewegung des Stabankers geliefert wird.

21. Gesteuerte elektrische Antriebsanordnung nach Anspruch 1 oder 2 mit einer Vielzahl von Treibern (Fig. 4, 110), die im Spalt angeordnet sind, und mit einer Vielzahl von jeweiligen Steuerleitern (34) neben den jeweiligen Treibern und davon isoliert zur Aufnahme eines Steuerstromes, wobei die jeweiligen Steuerleiter einen ersten (62) und einen zweiten (64) Teil aufweisen, die in einer Richtung parallel zur zweiten Richtung auf beiden Seiten der jeweiligen Treiber liegen und so angeordnet, sind, daß der Strom, der im ersten Teil fließt, in eine Richtung fließt, die dem im zweiten Teil fließenden Strom entgegengesetzt ist, und die jeweiligen Steuerleiter (34) mit einem jeweiligen Treiber (110) so verbunden sind, daß dann, wenn der jeweilige Treiber bewegt wird, der jeweilige Steuerleiter dazu neigt, den jeweiligen Treiber in seine Ausgangslage im Magnetfeld auf den Steuerstrom ansprechend zurückzuführen.

22. Gesteuerte elektrische Vorrichtung nach Anspruch 1, bei der der erste (62) und der zweite (64) Teil der Steuerleitereinrichtung (34) so im Magnetfeld angeordnet sind, daß der im ersten Teil (62) fließende Strom dazu neigt, den Teil aus dem Magnetfeld heraus in eine Richtung vom zweiten Teil (64) weg zu bewegen, und der im zweiten Teil fließende Strom dazu neigt, den zweiten Teil aus dem Magnetfeld heraus in eine Richtung vom ersten Teil weg zu bewegen.

23. Gesteuerte elektrische Antriebsvorrichtung mit einem Paar von Magnetpolen (234, 234a), die nebeneinander so angeordnet sind, daß sie dazwischen einen relativ schmalen in eine erste Richtung verlaufenden Spalt dazwischen haben, dadurch gekennzeichnet, daß sie weiterhin eine Treiberleitereinrichtung (236), die im Spalt angeordnet ist und eine Achse in einer zweiten Richtung senkrecht zur ersten Richtung aufweist, um einen Treiberstrom aufzunehmen, der in die zweite Richtung fließt, wobei die Treiberleitereinrichtung (236) auf den Treiberstrom anspricht, um aus einer Ausgangslage in eine dritte Richtung im rechten Winkel zur ersten und zweiten Richtung bewegt zu werden, und eine Steuereinrichtung (238, 244, 246 — Fig. 24—29) umfaßt, die ein Paar von Magneten (z.B. 238, 238a) umfaßt, die im Spalt angeordnet sind, wobei die Magnete des Paares von Magneten in der dritten Richtung auf jeweils gegenüberliegende Seiten der Treiberleitereinrichtung (236) angeordnet sind und die Steuereinrichtung (238, 238a) mit der Treiberleitereinrichtung (236) so verbunden ist, daß dann, wenn die Treiberleitereinrichtung bewegt wird, die Steuereinrichtung so arbeitet, daß sie gesteuerte Änderungen in der Linearbewegung der Treiberleitereinrichtung längs der dritten Richtung bewirkt.

24. Vorrichtung nach Anspruch 23, bei der die Steuereinrichtung (216, 216a) dazu neigt, die Treiberleitereinrichtung (214) in ihre Ausgangslage im Magnetfeld zurückzuführen, das durch das Paar von Magnetpolen (234, 234a) erzeugt wird.

25. Vorrichtung nach Anspruch 24, bei der das Paar von Magneten dreieckig geformte Magnete (244, 244a) umfaßt, welche Magnete Scheitel haben, die in entgegengesetzte Richtungen zeigen.

26. Vorrichtung nach Anspruch 24, bei der das Paar von Magneten zwei Magnete (246, 246a) mit nicht rechtwinkligem Querschnitt umfaßt.

27. Vorrichtung nach Anspruch 24, bei der das Paar von Magnetpolen zwei Magnete (248, 248a) mit nicht rechtwinkligem Querschnitt umfaßt.

28. Vorrichtung nach Anspruch 24, bei der das Paar von Magnetpolen (234, 234a) ein im wesentlichen gleichförmiges Magnetfeld liefert, das durch magnetische Kraftlinien bestimmt ist, die in die erste Richtung verlaufen.

29. Vorrichtung nach Anspruch 24, dadurch gekennzeichnet, daß die Magnetpole des Paares von Magnetpolen abstoßende Polarität haben.

30. Vorrichtung nach Anspruch 29, dadurch gekennzeichnet, daß die Magnete des Paares von Magneten der Steuereinrichtung (34) die gleiche Polarität haben.

31. Vorrichtung nach Anspruch 30, bei der die Magnete des Paares von Magneten der Steuereinrichtung (34) die gleiche Polarität wie das Paar von Magnetpolen (16, 18) haben.

32. Vorrichtung nach Anspruch 24, bei der die Polarität der Stirnflächen der Magnete der Steuereinrichtung (238, 238a) bezüglich der Polarität der Stirnflächen des Paares von Magnetpolen (234, 234a) abstoßend ist.

## Revendications

1. Dispositif électrique commandé comportant une paire de pôles magnétiques (18, 16) de polarité différente agencés adjacents l'un à l'autre de manière à avoir un jeu relativement étroit entre eux et un moyen conducteur de commande (34) pour recevoir un courant de commande, caractérisé en ce que les pôles magnétiques fournissent un champ magnétique essentiellement uniforme (52) délimité par des lignes de force magnétiques ayant une première direction, en ce qu'il est inclus un moyen conducteur d'attaque (32) disposé dans le jeu et ayant un axe longitudinal dans une seconde direction perpendiculaire à la première direction pour recevoir un courant d'attaque, ledit moyen conducteur d'attaque répondant au courant d'attaque et aux lignes de force magnétiques de manière à se déplacer d'une position initiale dans une troisième direction à angle droit par rapport à la première et seconde directions, en ce que le moyen conducteur de commande est fixé au moyen conducteur d'attaque et en est isolé, le moyen conducteur de commande (34) possédant une première (62) et une seconde (64) portions disposées, dans une direction parallèle à ladite seconde direction, de chaque côté du moyen conducteur d'attaque et agencées de manière que le courant circulant dans la première portion (62) circule dans un sens opposé à celui du courant circulant dans la seconde portion (64), le moyen conducteur de commande étant connecté au moyen conducteur d'attaque de manière que, lorsque le moyen conducteur d'attaque se déplace, le moyen de commande fonctionne de façon à provoquer des variations commandées dans un mouvement linéaire de ce moyen conducteur le long de la troisième direction.

2. Dispositif selon la revendication 1, caractérisé en ce que le moyen de commande a tendance à ramener le moyen conducteur d'attaque à sa position initiale dans le champ magnétique en réponse au courant de commande.

3. Dispositif selon l'une quelconque des revendications 1 ou 2, caractérisé en ce que le jeu a, dans la troisième direction une longueur qui est supérieure à la longueur du moyen conducteur d'attaque (32) dans cette troisième direction et en ce que, lorsque le déplacement du moyen conducteur d'attaque (32) dans cette troisième direction a lieu, le moyen conducteur d'attaque reste dans le champ magnétique uniforme.

4. Dispositif selon l'une quelconque des revendications 1 ou 2, caractérisé en ce que le moyen conducteur de commande (34) comprend un conducteur électrique en forme de spirale de forme générale rectangulaire plane.

5. Dispositif selon l'une quelconque des revendications 1 ou 2, caractérisé en ce que le moyen conducteur de commande (34) comprend un conducteur ayant plusieurs spires conductrices, isolées électriquement les unes des autres, ces spires conductrices étant divisées en deux portions (62, 64) disposées de chaque côté et isolées du moyen conducteur d'attaque (32).

6. Dispositif selon la revendication 5, caractérisé en ce que les portions (62, 64) du moyen conducteur de commande comportent un nombre égal de spires.

7. Agencement caractérisé en ce qu'au moins deux dispositifs conformes à l'une quelconque des revendications 1 ou 2 sont inclus et agencés dans un réseau plane (figure 6 — 124, 126) à un angle donné l'un par rapport à l'autre, de manière à fournir un déplacement plane complexe.

8. Agencement selon la revendication 7, caractérisé en ce que les au moins deux dispositifs (figure 9B, 150) comprennent un réseau plane de dispositifs et comportent un dispositif additionnel (188) fixé à un angle donné par rapport au réseau plane de dispositifs de manière à fournir un déplacement tridimensionnel.

9. Dispositif selon l'une quelconque des revendications 1 ou 2, caractérisé en ce que ce dispositif a une forme courbe.

10. Dispositif selon l'une quelconque des revendications 1 ou 2, caractérisé en ce que ce dispositif fonctionne comme un ressort électrique ayant un déplacement qui est directement proportionnel à une charge appliquée.

11. Dispositif selon l'une quelconque des revendications 1 ou 2, caractérisé en ce que la paire de pôles magnétiques comprend deux pôles magnétiques dont au moins un est de configuration non plate ou non rectangulaire (figure 12—18, 26—29).

12. Dispositif selon l'une quelconque des revendications 1 ou 2, caractérisé en ce que la paire de pôles magnétiques constitue un aimant en segment d'arc annulaire (figures 12, 16b, 18b), le moyen conducteur d'attaque comprend un dispositif d'attaque radial droit (32b) et le moyen conducteur de commande comprend un dispositif de commande courbe (34b) dans lequel un déplacement rotatif angulaire commandé est effectué.

13. Dispositif selon l'une quelconque des revendications 1 ou 2, caractérisé en ce que la paire de pôles magnétiques et le moyen conducteur de commande (34b — figure 12) sont configurés de manière à former un cylindre circulaire ayant un axe longitudinal parallèle au moyen conducteur d'attaque (32b), ce dispositif comprenant ainsi un dispositif rotatif.

14. Agencement d'attaque électrique commandé comprenant plusieurs dispositifs selon l'une quelconque des revendications 1 ou 2, caractérisé en ce qu'un premier dispositif de ces plusieurs dispositifs comporte la paire de pôles magnétiques (16b, 18b) et ledit moyen conducteur de commande (34b — figure 12) configuré de manière à former un cylindre circulaire droit ayant un axe longitudinal (208) parallèle au moyen conducteur d'attaque (32b), de sorte que le premier dispositif forme un dispositif rotatif, et en ce qu'un second dispositif de ces plusieurs dispositifs est connecté au premier dispositif dans une relation angulaire donnée, de sorte que cet agencement fournit un déplacement tri-dimentionnel complexe.

15. Dispositif selon l'une quelconque des revendications 1 ou 2, caractérisé en ce que la paire de pôles magnétiques est en forme d'un rectangle comportant un triangle à chaque extrémité (figures 13A, B, 210, 215) la première et la seconde portions du moyen conducteur de commande comprenant une paire de conducteurs (216, 216a) connectés en série et mis sous tension par un courant continu dans un sens de circulation du courant tel que chacun de ces conducteurs a tendance à se déplacer en dehors du champ magnétique dans une direction s'éloignant du moyen conducteur d'attaque et de l'autre conducteur.

16. Agencement d'attaque électrique commandé comprenant plusieurs dispositifs selon la revendication 15.

17. Dispositif selon l'une quelconque des revendications 1 ou 2, caractérisé en ce que la paire de pôles magnétiques est en forme de rectangle comportant des triangles de dimensions inégales (figures 13B, 207, 209) à chaque extrémité, la première et la seconde portions du moyen conducteur de commande (217, 217a) comprenant une paire de conducteurs incluant des conducteurs individuels, et un moyen pour fournir des courants de commande à ces conducteurs individuels séparément.

18. Dispositif selon l'une quelconque des revendications 1 ou 2, caractérisé en ce que la paire de pôles magnétiques est en forme de rectangle comportant un triangle (226, 228 — figure 14) à chaque extrémité, le sommet de chaque triangle pointant à l'intérieur vers le rectangle, la première et la seconde portions du moyen conducteur de commande (216, 216a) comprenant une paire de conducteurs mis sous tension de manière que les conducteurs se déplacent vers le moyen conducteur d'attaque (214) et l'un vers l'autre.

19. Dispositif selon l'une quelconque des revendications 1 ou 2, caractérisé en ce que la paire de pôles magnétiques est en forme de rectangle comportant un triangle à chaque extrémité (figure 15, 210), le moyen conducteur d'attaque (214) comprenant plusieurs dispositifs espacés le long du jeu, le moyen conducteur de commande (216) comprenant plusieurs paires de dispositifs de commande espacés le long de ce jeu, chaque dispositif d'attaque ayant une paire de dispositifs de commande, chaque paire de dispositifs de commande d'un dispositif d'attaque particulier incluant un premier dispositif de commande situé à proximité de l'un des dispositifs d'attaque qui est situé d'un côté de son dispositif d'attaque, et un second dispositif de commande situé à proximité d'un autre des dispositifs d'attaque qui est situé de l'autre côté de son dispositif d'attaque, chaque dispositif d'attaque étant positionné à proximité d'un premier dispositif de commande d'une paire de dispositifs de commande et d'un second dispositif de commande d'une autre paire de dispositifs de commande.

20. Agencement de dispositifs, caractérisé en ce qu'il est inclus plusieurs (figure 4) dispositifs d'attaque électrique commandés, selon l'une quelconques des revendications 1 ou 2, dans lequel, par rapport à chaque dispositif: la paire de pôles magnétiques (16, 18) forme un stator et le dispositif d'attaque (110, figure 4) forme une armature, le dispositif de commande étant adjacent au dispositif d'attaque, la première et la seconde portions étant disposées dans une direction parallèle à seconde direction, les dispositifs de commande des armatures des plusieurs dispositifs étant connectés ensemble de manière à former une barre d'armature (114), cette barre d'armature étant agencée de manière à passer entre les paires de pôles magnétiques des stators de ces dispositifs, ces paires de pôles magnétiques étant écartées de manière que les dispositifs d'attaque des armatures des dispositifs passent entre lesdites paires de pôles magnétiques en une séquence permettant un déplacement commandé continu de la barre d'armature.

21. Agencement d'attaque électrique commandé selon l'une quelconque des revendications 1 ou 2, caractérisé en ce qu'il est inclus plusieurs dispositifs d'attaque (figure 4, 110) disposés dans le jeu, et en ce qu'il est inclus plusieurs dispositifs de commande respectifs (34) adjacents aux dispositifs d'attaque respectifs et isolés de deux-ci pour recevoir un courant de commande, les dispositifs de commande respectifs ayant une première (62) et une seconde (64) portions disposées, dans une direction parallèle à la seconde direction, de chaque côté des dispositifs d'attaque respectifs et agencés de manière que le courant circulant dans la première portion circule dans un sens opposé à celui du courant circulant dans la seconde portion, chacun des dispositifs de commande respectifs (34) étant connecté à un dispositif d'attaque respectif (110) de sorte que, lorsque le dispotif d'attaque se déplace, le dispositif de commande respectif a tendance à ramener le dispositif d'attaque respectif à sa position initiale dans le champ magnétique en réponse au courant de commande.

22. Dispositif électrique commandé selon la revendication 1, caractérisé en ce que la première (62) et la seconde (64) portions du moyen conducteur de commande (34) sont agencées dans le champ magnétique de manière que le courant circulant dans la première portion (62) a tendance à déplacer cette première portion en dehors du champ magnétique dans une direction s'éloignant de la seconde portion (64), et que le courant circulant dans la seconde portion a tendance à déplacer cette seconde portion en dehors du champ magnétique dans une direction s'éloignant de la première portion.

23. Dispositif d'attaque électrique commandé comportant une paire de pôles magnétiques (234, 234a) disposés adjacents l'un à l'autre de manière à ce qu'il y ait entre eux un jeu relativement étroit dans une première direction, caractérisé en ce qu'il comprend en outre un moyen conducteur d'attaque (236) disposé dans ce jeu et ayant un axe dans une seconde direction, perpendiculaire à la première direction, pour recevoir un courant d'attaque circulant dans la seconde direction, ce moyen conducteur d'attaque (236) répondant au courant d'attaque de manière à se déplacer de sa position initiale dans une troisième direction, à angle droit par rapport aux premières et secondes directions, ainsi qu'un moyen de commande (238, 244, 246 — figures 24 à 29) comprenant une paire d'aimants (par exemple 238, 238a) disposée dans ce jeu, les aimants de cette paire d'aimants étant disposés, dans une troisième direction, sur les côtés opposés respectifs du moyen conducteur d'attaque (236), le moyen de commande (238, 238a) étant connecté au moyen conducteur d'attaque (236) de manière que, lorsque le moyen conducteur d'attaque se déplace, le moyen de commande fonctionne de façon à provoquer des variations commandées dans le mouvement linéaire de ce moyen le long de la troisième direction.

24. Dispositif selon la revendication 23, caractérisé en ce que la moyen de commande (216, 216a) a tendance à ramener le moyen conducteur d'attaque (214) à sa position initiale dans le champ magnétique créé par la paire de pôles magnétiques (234, 234a).

25. Dispositif selon la revendication 24, caractérisé en ce que la paire d'aimants comprend des aimants de forme triangulaire (244, 244a), les sommets de ces aimants étant dirigés dans des directions opposées.

26. Dispositif selon la revendication 24, caractérisé en ce que la paire d'aimants comprend deux aimants (246, 246a) de section non rectangulaire.

27. Dispositif selon la revendication 24, caractérisé en ce que la paire de pôles magnétiques comprend deux aimants (248, 248a) de section non rectangulaire.

28. Dispositif selon la revendication 24, caractérisé en ce que la paire de pôles magnétiques (234, 234a) fournit un champ magnétique essentiellement uniforme délimité par des lignes de force magnétiques s'étendant dans la première direction.

29. Dispositif selon la revendication 24, caractérisé en ce que la paire de pôles magnétiques est disposée avec polarité inverse.

30. Dispositif selon la revendication 29, caractérisé en ce que les aimants de la paire d'aimants du moyen de commande (34) ont la même polarité.

31. Dispositif selon la revendication 30, caractérisé en ce que la paire d'aimants du moyen de commande (34) a la même polarité que la paire de pôles magnétiques (16, 18).

32. Dispositif selon la revendication 24, caractérisé en ce que la polarité des faces des aimants du moyen de commande (238, 238a) est l'inverse de la polarité des faces de la paire de pôles magnétiques (234, 234a).

FIG. 2.

0 082 033

FIG. 3

FIG. 4.

FIG. 5.

FIG. 6.

2

## FIG. 7.

## FIG. 8.

3

0 082 033

FIG. 9A.

FIG. 9B.

0 082 033

## FIG. 10A.

## FIG. 10B.

FIG. 11.

FIG. 12.

FIG. 13A.

FIG. 13B.

*FIG. 14.*

*FIG. 15.*

*FIG. 16.*

*FIG. 17.*

## FIG. 19.

## FIG. 18.

## FIG. 20.

## FIG. 21.

## FIG. 22.

# FIG. 23.

# FIG. 24.

# FIG. 25.

# FIG. 26.

# FIG. 27.

# FIG. 28.

# FIG. 29.